(19) Europäisches Patentamt
European Patent Office
Office européen des brevets

(11) **EP 4 742 773 A1**

(12) **EUROPEAN PATENT APPLICATION**
published in accordance with Art. 153(4) EPC

(43) Date of publication:
**13.05.2026  Bulletin 2026/20**

(21) Application number: **24835380.7**

(22) Date of filing: **03.07.2024**

(51) International Patent Classification (IPC):
**H04W 52/02** (2009.01)      **H04W 72/1273** (2023.01)

(52) Cooperative Patent Classification (CPC):
Y02D 30/70

(86) International application number:
**PCT/CN2024/103415**

(87) International publication number:
**WO 2025/007900 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **04.07.2023  CN 202310818401**

(71) Applicant: **Vivo Mobile Communication Co., Ltd.
Dongguan, Guangdong 523863 (CN)**

(72) Inventor: **LIU, Xuanbing
Dongguan, Guangdong 523863 (CN)**

(74) Representative: **Shieldmark
P.O. Box 90471
2509 LL The Hague (NL)**

(54) **LP-WUS MONITORING METHOD, AND TERMINAL AND NETWORK-SIDE DEVICE**

(57)    Embodiments of this application disclose an LP-WUS monitoring method, a terminal, and a network side device, and belong to the field of communication technologies. The LP-WUS monitoring method in the embodiments of this application includes: receiving, by a terminal, an LP-WUS configuration, where the LP-WUS configuration includes at least one LP-WUS resource; and monitoring, by the terminal, an LP-WUS on a target LP-WUS resource based on the LP-WUS configuration, where the target LP-WUS resource belongs to the at least one LP-WUS resource.

200

A terminal receives an LP-WUS configuration, where the LP-WUS configuration includes at least one LP-WUS resource ～ S202

The terminal monitors an LP-WUS on a target LP-WUS resource based on the LP-WUS configuration, where the target LP-WUS resource belongs to the at least one LP-WUS resource ～ S204

FIG. 2

EP 4 742 773 A1

## Description

This application claims priority to Chinese Patent Application No. 202310818401.7, filed with the China National Intellectual Property Administration on July 4, 2023 and entitled "LP-WUS MONITORING METHOD, TERMINAL, AND NETWORK SIDE DEVICE", which is incorporated herein by reference in its entirety.

## TECHNICAL FIELD

This application relates to the field of communication technologies, and specifically, relates to a low-power wake-up signal (Low-Lower Wake-Up Signaling, LP-WUS) monitoring method, a terminal, and a network side device.

## BACKGROUND

A terminal usually includes a main communication module and a low-power communication module (also referred to as a low-power wake-up receiving module, a low-power receiver, and the like). The main communication module is mainly configured to transmit and receive mobile communication data, and the low-power communication module is mainly configured to receive an LP-WUS.

LP-WUSs are usually some simple on-off keying (on-off keying) signals. The low-power communication module can learn a wake-up notification through simple energy detection and subsequent possible processes such as sequence detection and recognition. The main communication module may enter a sleep or closed state to maintain a low power consumption level while the terminal enables the low-power communication module to receive the LP-WUS, thereby achieving power consumption saving by receiving the LP-WUS.

However, an LP-WUS monitoring solution is not provided in the related art, and consequently, the terminal cannot save power by monitoring the LP-WUS.

## SUMMARY

Embodiments of this application provide an LP-WUS monitoring method, a terminal, and a network side device, to resolve a problem that the terminal cannot monitor an LP-WUS.

According to a first aspect, an LP-WUS monitoring method is provided, including: receiving, by a terminal, an LP-WUS configuration, where the LP-WUS configuration includes at least one LP-WUS resource; and monitoring, by the terminal, an LP-WUS on a target LP-WUS resource based on the LP-WUS configuration, where the target LP-WUS resource belongs to the at least one LP-WUS resource.

According to a second aspect, an LP-WUS monitoring method is provided, including: sending, by a network side device, an LP-WUS configuration, where the LP-WUS configuration includes at least one LP-WUS resource, the LP-WUS configuration is used by a terminal to monitor an LP-WUS on a target LP-WUS resource, and the target LP-WUS resource belongs to the at least one LP-WUS resource.

According to a third aspect, an LP-WUS monitoring apparatus is provided, including: a receiving module, configured to receive an LP-WUS configuration, where the LP-WUS configuration includes at least one LP-WUS resource; and the receiving module is further configured to monitor an LP-WUS on a target LP-WUS resource based on the LP-WUS configuration, where the target LP-WUS resource belongs to the at least one LP-WUS resource.

According to a fourth aspect, an LP-WUS monitoring apparatus is provided, including: a sending module, configured to send an LP-WUS configuration, where the LP-WUS configuration includes at least one LP-WUS resource, the LP-WUS configuration is used by a terminal to monitor an LP-WUS on a target LP-WUS resource, and the target LP-WUS resource belongs to the at least one LP-WUS resource.

According to a fifth aspect, a terminal is provided, where the terminal includes a processor and a memory, the memory stores a program or instructions runnable on the processor, and the program or instructions, when executed by the processor, implement the steps of the method according to the first aspect.

According to a sixth aspect, a terminal is provided, including a processor and a communication interface. The communication interface is configured to receive an LP-WUS configuration, where the LP-WUS configuration includes at least one LP-WUS resource; and monitor an LP-WUS on a target LP-WUS resource based on the LP-WUS configuration, where the target LP-WUS resource belongs to the at least one LP-WUS resource.

According to a seventh aspect, a network side device is provided, where the network side device includes a processor and a memory, the memory stores a program or instructions runnable on the processor, and the program or the instructions, when executed by the processor, implement the steps of the method according to the second aspect.

According to an eighth aspect, a network side device is provided, including a processor and a communication interface, where the communication interface is configured to send an LP-WUS configuration, where the LP-WUS configuration includes at least one LP-WUS resource, the LP-WUS configuration is used by a terminal to monitor an LP-WUS on a target LP-WUS resource, and the target LP-WUS resource belongs to the at least one LP-WUS resource.

According to a ninth aspect, a readable storage medium is provided, where the readable storage medium stores a program or instructions, and the program or the instructions, when executed by a processor, implement the steps of the method according to the first aspect, or implement the steps of the method according to the second aspect.

According to a tenth aspect, a wireless communication system is provided, including a terminal and a network side device, where the terminal may be configured to perform the steps of the method according to the first aspect, and the network side device may be configured to perform the steps of the method according to the second aspect.

According to an eleventh aspect, a chip is provided, where the chip includes a processor and a communication interface, the communication interface is coupled to the processor, and the processor is configured to run a program or instructions to implement the steps of the method according to the first aspect, or implement the steps of the method according to the second aspect.

According to a twelfth aspect, a computer program/program product is provided, where the computer program/-program product is stored in a storage medium, and the computer program/program product is executed by at least one processor, to implement the steps of the method according to the first aspect, or implement the steps of the method according to the second aspect.

In the embodiments of this application, a terminal receives an LP-WUS configuration, where the LP-WUS configuration includes at least one LP-WUS resource, and the terminal monitors an LP-WUS on a target LP-WUS resource based on the LP-WUS configuration, so that the terminal achieves power consumption saving by receiving the LP-WUS. In addition, the LP-WUS configuration may include a plurality of LP-WUS resources, and the terminal may be pre-allocated to monitor one of the LP-WUS resources, thereby increasing a cell capacity and facilitating measurement by the terminal.

## BRIEF DESCRIPTION OF THE DRAWINGS

FIG. 1 is a schematic diagram of a wireless communication system according to an embodiment of this application;

FIG. 2 is a schematic flowchart of an LP-WUS monitoring method according to an embodiment of this application;

FIG. 3 is a schematic diagram of time-frequency positions of a plurality of LP-WUS resources in an LP-WUS configuration according to an embodiment of this application;

FIG. 4 is a schematic diagram of time-frequency positions of an LP-SS and a plurality of LP-WUS resources in an LP-WUS configuration according to an embodiment of this application;

FIG. 5 is a schematic diagram of time-frequency positions of an LP-SS and a plurality of LP-WUS resources in an LP-WUS configuration according to an embodiment of this application;

FIG. 6 is a schematic diagram of time-frequency positions of an LP-SS and a plurality of LP-WUS resources in an LP-WUS configuration according to an embodiment of this application;

FIG. 7 is a schematic flowchart of an LP-WUS monitoring method according to an embodiment of this application;

FIG. 8 is a schematic structural diagram of an LP-WUS monitoring apparatus according to an embodiment of this application;

FIG. 9 is a schematic structural diagram of an LP-WUS monitoring apparatus according to an embodiment of this application;

FIG. 10 is a schematic structural diagram of a communication device according to an embodiment of this application;

FIG. 11 is a schematic structural diagram of a terminal according to an embodiment of this application; and

FIG. 12 is a schematic structural diagram of a network side device according to an embodiment of this application.

## DETAILED DESCRIPTION

The following clearly describes the technical solutions in embodiments of this application with reference to the accompanying drawings in the embodiments of this application. Clearly, the described embodiments are some but not all of the embodiments of this application. Based on the embodiments of this application, all other embodiments obtained by a person of ordinary skill in the art should fall within the protection scope of this application.

The terms "first", "second", and the like in this application are intended to distinguish similar objects, but are not necessarily used to describe a specific order or sequence. It should be understood that, the terms in such a way are exchangeable in a proper case, so that the embodiments of this application described herein can be implemented in an order other than the order shown or described herein. In addition, objects distinguished by "first", "second", and the like are generally of one type, and a quantity of objects is not limited. For example, there may be one or more first objects. In addition, "or" in this application represents at least one of connected objects. For example, "A or B" covers three solutions, for example, solution 1: including A and excluding B; solution 2: including B and excluding A; and solution 3: including both A and B. The character "/" generally indicates an "or" relationship between the associated objects.

The term "indication" in this application may be a direct indication (or an explicit indication), or may be an indirect indication (or an implicit indication). The direct indication may be understood as that a transmitter explicitly notifies a receiver of content of a sent indication such as specific information, an operation that needs to be performed, or a request result. The indirect indication may be understood as that a receiver determines corresponding information according to an indication sent by a transmitter, or performs determining and determines an operation that needs to be performed or a request result according to a determining result.

It should be noted that the technologies described in the embodiments of this application are not limited to a long term evolution (Long Term Evolution, LTE)/LTE-advanced (LTE-Advanced, LTE-A) system, and may further be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or another system. The terms "system" and "network" in the embodiments of this application are often used interchangeably. The described technology may be used in the foregoing system and radio technology, or may be used in another system and radio technology. The following describes a new radio (New Radio, NR) system as an example, and NR terms are used in most of the following descriptions. However, these technologies are also applicable to systems other than the NR system, for example, a 6th generation (6th Generation, 6G) communication system.

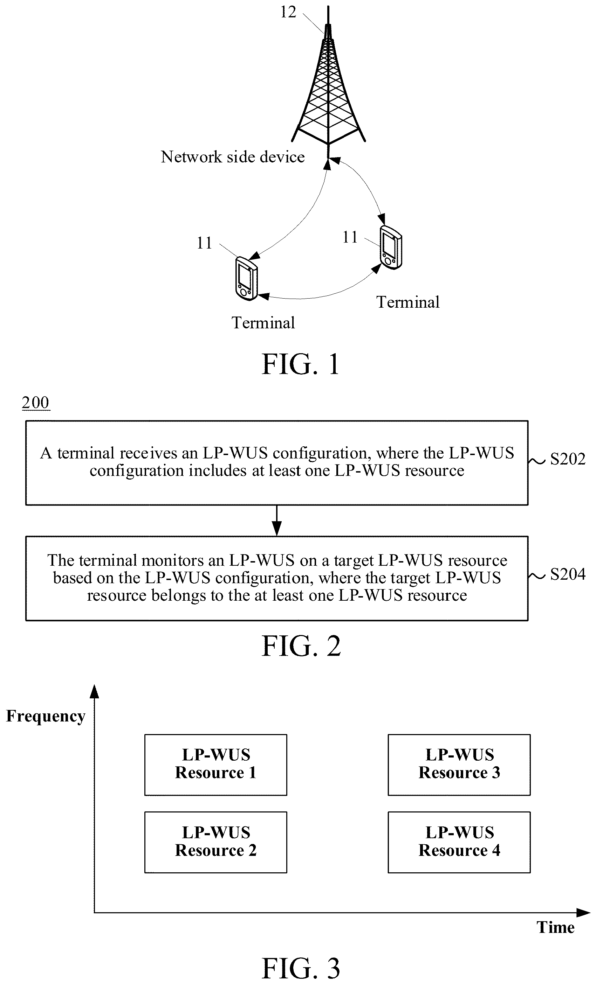

FIG. 1 is a block diagram of a wireless communication system to which an embodiment of this application is applicable. The communication system includes a terminal 11 and a network side device 12. The terminal device 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), a vehicle user equipment (Vehicle User Equipment, VUE), a ship device, a pedestrian user equipment (Pedestrian User Equipment, PUE), a smart home device (a home device having a wireless communication function, such as a refrigerator, a television, a washing machine, furniture, or the like), a game console, a personal computer (Personal Computer, PC), a teller machine, a self-service machine, or another terminal side device. The wearable device includes: a smart watch, a smart bracelet, a smart headset, smart glasses, smart jewelry (a smart bangle, a smart chain bracelet, a smart ring, a smart necklace, a smart ankle bangle, a smart anklet, or the like), a smart wristband, smart clothing, and the like. The vehicle user equipment may alternatively be referred to as an in-vehicle terminal, an in-vehicle controller, an in-vehicle module, an in-vehicle component, an in-vehicle chip, an in-vehicle unit, or the like. It should be noted that, in the embodiments of this application, a specific type of the terminal 11 is not limited. The network side device 12 may include an access network device or a core network device. The access network device may alternatively be referred to as a radio access network (Radio Access Network, RAN) device, a radio access network function, or a radio access network unit. The access network device may include a base station, a wireless local area network (Wireless Local Area Network) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. Provided that the same technical effects are achieved, the base station is not limited to a specific technology vocabulary. It should be noted that, in the embodiments of this application, a base station in an NR system is only used as an example for description, and a specific type of the base station is not limited.

An LP-WUS monitoring method provided in the embodiments of this application is described in detail below through some embodiments and application scenarios thereof with reference to the accompanying drawings.

As shown in FIG. 2, an embodiment of this application provides an LP-WUS monitoring method 200. The method may be performed by a terminal. In other words, the method may be performed by software or hardware installed in the terminal. The method includes the following steps.

S202: A terminal receives an LP-WUS configuration, where the LP-WUS configuration includes at least one LP-WUS resource.

Optionally, the LP-WUS configuration is transmitted by using a system message, or the LP-WUS configuration is transmitted by using a radio resource control (Radio Resource Control, RRC) release (Release) message.

The LP-WUS resource mentioned in the embodiments of this application may include time-frequency domain resource information in which the LP-WUS is located, and includes at least one of the following: (1) a resource block identifier, for example, a pattern (Pattern) identifier; (2) frequency domain resource information, for example, a frequency; and (3) time domain resource information, including time information, such as a period, a start point, a time offset, or a number in a time sequence.

In this embodiment, the network side device may configure one or more (at least two) LP-WUS resources, and pre-allocates a group of terminals (a plurality of terminals) to one LP-WUS resource.

To expand a cell capacity and facilitate measurement by the terminal, in this embodiment, a cell carrier bandwidth may be divided into a plurality of parts, each part is used as an LP-WUS resource, and then a group of terminals are pre-allocated to one of the parts. As shown in FIG. 3, the LP-WUS configuration includes four LP-WUS resources.

It may be understood that, if the network side device configures only one LP-WUS resource, terminals in a cell all need to monitor an LP-WUS on the LP-WUS resource, to wake up a main communication module of the terminal to receive data. This may result in a limited quantity of terminals that can be supported by the cell, that is, a limited capacity. In this embodiment, a plurality of LP-WUS resources may be configured to effectively expand the cell capacity. In this case, a single terminal only needs to monitor the LP-WUS on the allocated LP-WUS resource.

S204: The terminal monitors an LP-WUS on a target LP-WUS resource based on the LP-WUS configuration, where the target LP-WUS resource belongs to the at least one LP-WUS resource.

In this embodiment, the target LP-WUS resource may be an LP-WUS resource in the LP-WUS configuration.

Optionally, the terminal may determine the target LP-WUS resource based on at least one of the following: (1) at least one of the following of the target LP-WUS resource or a target LP-SS in the LP-WUS configuration: an identifier, time-frequency domain resource information, and a frequency; and (2) a target rule, where the target rule is related to an identifier of the terminal (UE-ID), and the identifier of the terminal may include at least one of the following: an international mobile equipment identity (International Mobile Equipment Identity, IMEI), an international mobile subscriber identity (International Mobile Subscriber Identification Number, IMSI), a 5G-SAE-temporary mobile subscriber identity (5G-SAE-Temporary Mobile Subscriber Identity, 5G-S-TMSI), or a low-power wake-up module identifier (Low Lower-Wake Up Signaling Identification, LP-WUS ID).

The LP-WUS ID is an identifier of an LP-WUS for being received by the terminal. The LP-WUS ID may be an identifier configured by a network for UE or generated based on some or all bits of another UE ID such as the 5G-S-TMSI.

For example, the terminal determines a sequence number of the target LP-WUS resource by using the following formula:

$$\text{Sequence number of a target LP-WUS resource} = UE\_ID \bmod N$$

where N is a quantity of LP-WUS resources included in the LP-WUS configuration; and the UE-ID is some or all bits of the 5G-S-TMSI or the LP-WUS ID.

According to the LP-WUS monitoring method provided in the embodiments of this application, a terminal receives an LP-WUS configuration, where the LP-WUS configuration includes at least one LP-WUS resource, and the terminal monitors an LP-WUS on a target LP-WUS resource based on the LP-WUS configuration, so that the terminal achieves power consumption saving by receiving the LP-WUS. In addition, the LP-WUS configuration may include a plurality of LP-WUS resources, and the terminal may be pre-allocated to monitor one of the LP-WUS resources, thereby increasing a cell capacity and facilitating measurement by the terminal.

Optionally, in the embodiments of this application, the LP-WUS configuration received by the terminal may further include at least one low-power synchronization signal (Low-Lower Synchronization Signal, LP-SS), and the method further includes: monitoring, by the terminal, a target LP-SS based on the LP-WUS configuration, where the target LP-SS belongs to the at least one LP-SS.

The LP-SS may be used for carrying a cell identifier, a system message indication, time information, synchronization information, a measurement reference signal, and the like. The terminal may perform at least one of the following operations based on the LP-SS: (1) identifying a cell; (2) obtaining system information, for example, some system information, an earthquake and tsunami warning system (Earthquake and Tsunami Warning System, ETWS), or a public warning system (Public Warning System, PWM); (3) synchronizing to the cell; and (4) measuring a cell signal strength.

Optionally, the LP-SS may include a first LP-SS and a second LP-SS. The first LP-SS includes at least one of the following: a cell identifier, a system message indication, time information, and synchronization information, and the first LP-SS supports a measurement function; and the second LP-SS supports a measurement function. For example, the network side device sends a primary LP-SS (namely, the first LP-SS) and a plurality of optional secondary LP-SSs (namely, the second LP-SSs). The secondary LP-SSs are used for measurement or synchronization. In a conventional solution, the terminal executes a measurement task by using a main communication module. This example facilitates executing a measurement or synchronization task by the terminal by using a low-power communication module, thereby reducing terminal costs. In addition, an information amount carried by the secondary LP-SS is less than an information amount carried by the primary LP-SS, thereby facilitating reducing signaling overhead of the LP-SS. In addition, if a signal for measurement is not in a same frequency range as the LP-WUS resource, the terminal needs to perform inter-frequency measurement, and the measurement and LP-WUS receiving are performed in time division, increasing measurement complexity and power consumption. The terminal is pre-allocated to monitor one LP-WUS resource and an LP-SS, thereby simplifying a measurement process.

Optionally, the target LP-WUS resource and the target LP-SS satisfy at least one of the following.

(1) The target LP-WUS resource and the target LP-SS occupy a same frequency domain position. This example helps the terminal monitor the LP-WUS and the LP-SS by using the low-power communication module, and monitor the LP-SS by using the low-power communication module, to perform measurement or synchronization, thereby reducing terminal costs.

(2) The terminal monitors the LP-WUS and the target LP-SS in time division. For example, in a case that the target LP-WUS resource and the target LP-SS occupy the same frequency domain position, the target LP-WUS and the target LP-SS may be sent in time division, to avoid a resource conflict between the LP-SS and the LP-WUS.

(3) The target LP-SS is subjected to inter-carrier frequency hopping transmission in the target LP-WUS resource. In this example, to avoid an imbalanced impact on user groups monitoring a same LP-WUS, the network side device may perform inter-carrier frequency hopping in LP-WUS resources to send the LP-SS.

In the foregoing embodiment, it is mentioned that the LP-WUS configuration includes at least one LP-WUS resource and at least one LP-SS. The following provides detailed descriptions in three possible examples. The following three examples may be combined and implemented as required.

In the first example, the LP-WUS configuration includes a plurality of LP-WUS resources and one LP-SS (which may be referred to as a public LP-SS), the terminal monitors the LP-WUS on the target LP-WUS resource based on the LP-WUS configuration and monitors the target LP-SS, and the target LP-SS is the one LP-SS.

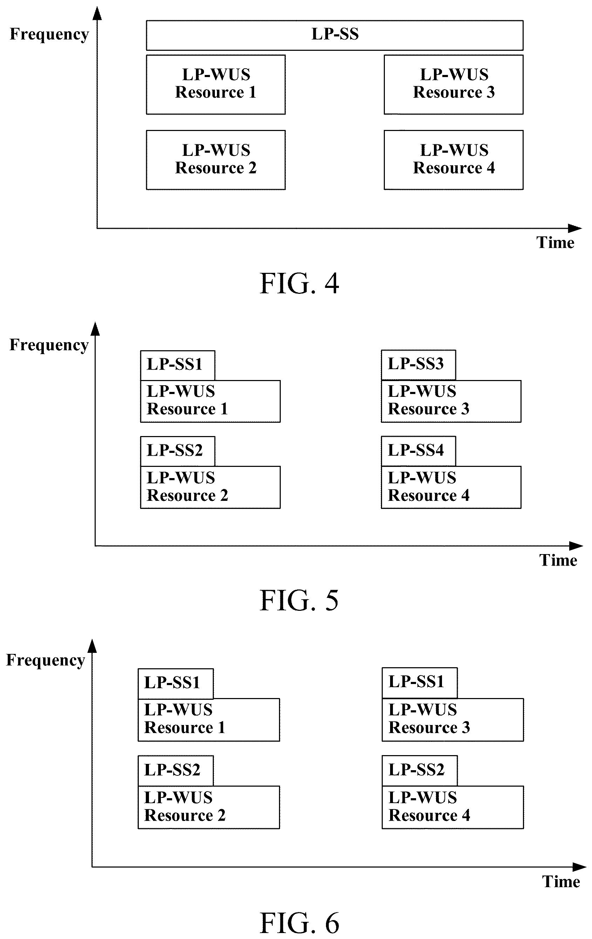

In this example, the network side device configures one LP-SS and a plurality of LP-WUS resources, and the terminal monitors the LP-SS in a cell. As shown in FIG. 4, the LP-WUS configuration sent by the network side device includes one LP-SS, which corresponds to N LP-WUS resources. In this example, N may be equal to 4.

The LP-WUS configuration is shown in the following table:

```
LP-SS;
LP-WUS Resource List;
{
LP-WUS Resource1;
LP-WUS Resource2;
...,
LP-WUS ResourceN
}
```

In this example, the terminal may monitor the LP-WUS on an allocated target LP-WUS resource, and monitor the public LP-SS.

In the second example, the LP-WUS configuration includes a plurality of LP-WUS resources and a plurality of LP-SSs, one LP-SS is in a same time domain range as at least one LP-WUS resource corresponding to the LP-SS, and the terminal monitors the LP-WUS on the target LP-WUS resource based on the LP-WUS configuration, and monitors a target LP-SS in a same time domain range as the target LP-WUS resource.

For example, the network side device configures a plurality of LP-SSs, where one LP-SS corresponds to at least one LP-WUS resource, and the LP-SS and the LP-WUS resource belong to a same time domain range. In this way, an LP-SS is correspondingly configured at a time domain position of each LP-WUS resource, thereby facilitating monitoring by the terminal the LP-WUS and the LP-SS.

As shown in FIG. 5, the LP-WUS configuration sent by the network side device includes N LP-SSs, which correspond to N LP-WUS resources, and the LP-SSs are in a one-to-one correspondence with the LP-WUS resources. In this example, N may be equal to 4.

The LP-WUS configuration is shown in the following table:

```
LP-WUS Configuration List;
{
{LP-WUS Resource1; LP-SS_1;}
{LP-WUS Resource2; LP-SS_2;}
...
```

(continued)

> {LP-WUS ResourceN; LP-SS_N;}
> }

In this example, the terminal may monitor the LP-WUS on an allocated target LP-WUS resource, and monitor a target LP-SS that is in a same time domain range as the target LP-WUS resource.

In the third example, the LP-WUS configuration includes a plurality of LP-WUS resources and a plurality of LP-SSs, one LP-SS is in a same frequency domain range as at least one LP-WUS resource corresponding to the LP-SS, and the terminal monitors the LP-WUS on the target LP-WUS resource based on the LP-WUS configuration, and monitors a target LP-SS in a same frequency domain range as the target LP-WUS resource.

For example, the network side device configures a plurality of LP-SSs, where one LP-SS corresponds to at least one LP-WUS resource, and the LP-SS and the LP-WUS resource belong to a same frequency domain range. In this way, an LP-SS is correspondingly configured at a frequency domain position of each LP-WUS resource, thereby facilitating monitoring by the terminal the LP-WUS and the LP-SS.

As shown in FIG. 6, the LP-WUS configuration sent by the network side device includes N LP-SSs, and each LP-SS corresponds to M LP-WUS resources. In this example, N may be equal to 4.

The LP-WUS configuration is shown in the following table:

> LP-WUS Configuration List;
> {
> {LP-SS_1; LP-WUS Resource1; LP-WUS Resource2; ..., LP-WUS ResourceM;}
> {LP-SS_2; LP-WUS Resource_(M+1); ..., LP-WUS Resource_(M+M);}
> }

In this example, the terminal may monitor the LP-WUS on an allocated target LP-WUS resource, and monitor a target LP-SS that is in a same frequency domain range as the target LP-WUS resource.

It may be understood that, the network side device may send an LP-SS to each cell, and the terminal may determine a signal strength by monitoring the LP-SS, and learn cell information carried by using the LP-SS. In a case that the LP-SS is configured by using different frequency resources, the terminal cannot monitor the LP-WUS and the LP-SS at the same time. Consequently, the terminal needs to monitor the LP-WUS and the LP-SS in time division. To prevent the terminal from being incapable of monitoring the LP-WUS when monitoring the LP-SS, in the foregoing embodiment, the network side device may deploy an LP-WUS resource and the LP-SS in a same frequency in a serving cell. In a case that a plurality of LP-WUS resources are configured, a plurality of LP-SSs may also be configured, thereby facilitating monitoring the LP-WUS and the LP-SS by the terminal by using the low-power communication module.

Optionally, the method provided in the foregoing three embodiments further includes the following step: determining, by the terminal, the target LP-WUS resource or the target LP-SS based on at least one of the following:

(1) At least one of the following of the target LP-WUS resource or the target LP-SS in the LP-WUS configuration: an identifier, time-frequency domain resource information, and a frequency.

For example, the network side device configures a target LP-WUS resource or a target LP-SS to the terminal. For example, an identifier of the target LP-WUS resource or an identifier of the target LP-SS, or time-frequency domain resource information is sent to the terminal by using the LP-WUS configuration.

For another example, the network side device configures a frequency of the target LP-WUS resource or a frequency of the target LP-SS to the terminal, and the terminal determines the target LP-WUS resource and the target LP-SS within a configured frequency range according to the target rule.

Considering hardware costs of the terminal, a frequency range supported by the low-power communication module of the terminal is limited. According to the method, the target LP-WUS resource and the target LP-SS can be conveniently determined within a frequency range supported by the terminal.

(2) A target rule, where the target rule is related to an identifier of the terminal. The identifier of the terminal may include at least one of the following: an IMEI, an IMSI, a 5G-S-TMSI, and an LP-WUS ID.

In this example, the terminal may determine the target LP-WUS resource and the target LP-SS corresponding to the target LP-WUS resource according to the target rule. For example, the terminal selects one of the plurality of LP-WUS resources, and selects an LP-SS corresponding to the LP-WUS resource. The LP-WUS resource and the LP-SS are in a same frequency range or a same time domain range.

When the terminal supports a plurality of LP-WUS resources, according to the method, the terminal can be flexibly allocated to different LP-WUS resources and monitor a corresponding LP-SS.

The foregoing plurality of embodiments mainly describe that the terminal monitors the target LP-WUS resource and the target LP-SS. Based on this, the following content is described below by using a plurality of embodiments: the terminal performs serving cell measurement or neighboring cell measurement based on the LP-WUS or the LP-SS, and supports relaxed measurement (relaxed measurement) during measurement; and the terminal performs evaluation of cell selection and reselection based on the LP-WUS or the LP-SS.

Based on the foregoing embodiments, the method further includes at least one of the following:

(1) performing, by the terminal, serving cell measurement or radio resource management (Radio Resource Management, RRM) measurement by using a low-power communication module;
(2) performing, by the terminal, LP-WUS or LP-SS-based serving cell measurement; and
(3) performing, by the terminal, LP-WUS or LP-SS-based RRM measurement, where the RRM measurement includes serving cell RRM measurement or neighboring cell RRM measurement.

In this embodiment, the terminal may perform measurement based on an LP-WUS or an LP-SS, for example, inter-cell LP-SS intra-frequency deployment, which is conducive to performing of the RRM measurement by the terminal.

Optionally, the method further includes at least one of the following:

(1) It is considered that a low-power low-mobility relaxed measurement criterion (relaxed measurement criterion) is satisfied if a difference between a first serving cell receiving strength (Srxlev-lowpower) and a low-power reference serving cell receiving strength ($Srxlev_{Ref}$-lowpower) is less than or equal to a first threshold ($S_{SearchDeltaP}$-lowpower), where the first serving cell receiving strength is a serving cell receiving strength measured by using the low-power communication module.
(2) It is considered that a relaxed measurement criterion of a low-power not-at-cell-edge terminal is satisfied if a first serving cell receiving strength is greater than a low-power serving cell receiving strength threshold ($S_{SearchThresholdP}$-lowpower), where the first serving cell receiving strength is a serving cell receiving strength measured by using the low-power communication module.

The relaxed measurement (relaxed measurement) refers to at least one measurement that is not performed by UE or a requirement of which is relaxed. It may be understood that, the at least one measurement refers to at least one measurement item or measurement object.

This example facilitates performing of relaxed measurement (relaxed measurement) by the terminal based on the LP-SS, which is conducive to energy saving of the terminal. However, in the related art, relaxed measurement is performed based on a main communication module, and power consumption of the main communication module is much greater than power consumption of a low-power communication module. Therefore, this example is conducive to energy saving of the terminal.

Optionally, the method further includes: setting, by the terminal, the low-power reference serving cell receiving strength to a current serving cell receiving strength measured by using the low-power communication module in a case that one of the following conditions is satisfied:

(1) after a new cell or area is selected or reselected;
(2) the first serving cell receiving strength is greater than the low-power reference serving cell receiving strength, where the first serving cell receiving strength is a serving cell receiving strength measured by using the low-power communication module;
(3) when duration for which the low-power low-mobility relaxed measurement criterion is not satisfied reaches duration of a fluctuation monitoring window of low-power measurement, where in this embodiment, the fluctuation monitoring window of the low-power measurement may be defined, and for details, reference may be made to the fluctuation monitoring window defined in relaxed measurement based on the main communication module in the related art;
(4) after a main communication module-based relaxed measurement criterion is satisfied, and for details, reference may be made to a main communication module-based relaxed measurement criterion defined in the related art; and
(5) after performing of relaxed measurement is started.

The method provided in the foregoing examples further includes the following step: selecting, by the terminal, to perform a target relaxed measurement operation in a case that at least one of the following conditions is satisfied:

(1) an indication instructing the low-power communication module to relax measurement of a main communication module is configured;

(2) information instructing the terminal to perform low-mobility relaxed measurement evaluation based on measurement of the low-power communication module is configured;

(3) the low-power low-mobility relaxed measurement criterion is satisfied;

(4) information instructing the terminal to perform not-at-cell-edge relaxed measurement evaluation based on measurement of the low-power communication module is configured;

(5) a low-power not-at-cell-edge relaxed measurement criterion is satisfied; and

(6) duration for which the terminal already performs LP-WUS or LP-SS-based serving cell measurement or neighboring cell measurement reaches at least the duration of the fluctuation monitoring window of the low-power measurement (TsearchDeltaP-lowPower).

Optionally, the target relaxed measurement operation includes at least one of the following.

(1) Relax serving cell measurement performed by using the main communication module. For example, a period of the serving cell measurement performed by the main communication module is extended, which is conducive to power saving of the terminal.

(2) Relax RRM measurement performed by using the main communication module. For example, a period of the RRM measurement performed by the main communication module is extended, or the main communication module does not perform some or performs none of the RRM measurement within one or several periods of time, which is conducive to power saving of the terminal. The RRM measurement includes measurement on an intra-frequency cell, an NR inter-frequency cell, an inter-system frequency cell, or the like.

(3) Relax serving cell measurement performed by using the low-power communication module. For example, a period of the serving cell measurement performed by the low-power communication module is extended, which is conducive to power saving of the terminal.

(4) Relax RRM measurement performed by using the low-power communication module. For example, a period of the RRM measurement performed by the low-power communication module is extended, or the low-power communication module does not perform some or performs none of the RRM measurement within one or several periods of time, which is conducive to power saving of the terminal. The RRM measurement includes measurement on an intra-frequency cell, an NR inter-frequency cell, an inter-system frequency cell, or the like.

(5) Perform RRM measurement by using the low-power communication module. The RRM measurement includes measurement on an intra-frequency cell, an NR inter-frequency cell, an inter-system frequency cell, or the like. In other words, the RRM measurement based on the main communication module is replaced with the RRM measurement based on the low-power communication module, which is conducive to power saving of the terminal.

(6) During measurement evaluation performed by the low-power communication module, the main communication module is in a sleep or closed state. In this operation, both the serving cell measurement and the RRM measurement are performed based on the low-power communication module.

According to the foregoing embodiment, the terminal may perform relaxed measurement in an idle state. In a conventional solution, the terminal executes a measurement task by using the main communication module. In a relaxed measurement stage, power consumption of the main communication module is higher than power consumption of the low-power communication module. In this embodiment, the low-power communication module may monitor the signal strength of the serving cell, to perform a relaxed measurement process, thereby facilitating energy saving of the terminal.

The method provided in the foregoing examples further includes the following step: receiving, by the terminal, a relaxed measurement configuration, where the relaxed measurement configuration includes at least one of the following:

(1) information instructing to relax, based on measurement of the low-power communication module, measurement of the main communication module;

(2) information instructing the terminal to perform low-mobility relaxed measurement evaluation based on measurement of the low-power communication module;

(3) information instructing the terminal to perform not-at-cell-edge relaxed measurement evaluation based on measurement of the low-power communication module;

(4) a first threshold, where the first threshold is used for representing a threshold of a received signal strength of a serving cell measured by the low-power communication module defined for relaxed measurement;

(5) a low-power serving cell receiving strength threshold, where the low-power serving cell receiving strength threshold is used for representing a threshold of the received signal strength of the serving cell measured by the low-power communication module defined for relaxed measurement; and

(6) duration of the fluctuation monitoring window of the low-power measurement, where the duration of the fluctuation monitoring window of the low-power measurement is used for representing: relaxed measurement evaluation duration of fluctuation of the received signal strength of the serving cell measured by the low-power communication module.

The foregoing plurality of embodiments mainly describe that the terminal performs serving cell measurement or neighboring cell measurement based on the LP-SS, to support relaxed measurement. The following describes, by using a plurality of embodiments, a cell selection and reselection process performed by the terminal.

Optionally, the method further includes: performing, by the terminal, cell selection or reselection based on measurement of the low-power communication module. In this embodiment, the terminal performs cell selection, reselection, or the like based on the LP-SS, which is conducive to energy saving of the terminal.

Optionally, the method further includes: camping, by the terminal, on a current cell or area in a case that at least one of the following conditions is satisfied: (1) a first serving cell receiving strength is greater than a second threshold; and (2) cell selection based on measurement of a low-power communication module is configured, where the first serving cell receiving strength is a serving cell receiving strength measured by using the low-power communication module.

Optionally, the method further includes: performing, by the terminal, a target operation in a case that at least one of the following conditions is satisfied: (1) a first serving cell receiving strength is less than a third threshold; and (2) an indication of cell-reselection evaluation based on measurement of the low-power communication module is configured, where the first serving cell receiving strength is a serving cell receiving strength measured by using the low-power communication module.

The target operation includes at least one of the following: (1) starting RRM measurement based on the low-power communication module; (2) serving cell measurement or RRM measurement based on the main communication module; and (3) an evaluation process of cell reselection.

The performing, by the terminal, cell selection or reselection based on measurement of the low-power communication module includes: calculating, by the terminal, an S value based on measurement of a low-power communication module; and the method further includes: receiving, by the terminal, a target configuration, where the target configuration includes a low-power offset, and the low-power offset value is used for calculating the S value. For the S value, refer to an S criterion of cell selection.

Optionally, the foregoing embodiments of cell selection or reselection further include the following step: receiving, by the terminal, a target configuration, where the target configuration includes at least one of the following:

(1) a second threshold, where the second threshold is used for evaluating whether a current cell or area is capable of being camped on;
(2) a third threshold, where the third threshold is used for evaluating whether to start to use the low-power communication module or the main communication module to perform RRM measurement;
(3) information instructing to perform cell selection based on measurement of the low-power communication module;
(4) information instructing to perform cell-reselection evaluation based on measurement of the low-power communication module or LP-SS-based measurement; and
(5) the low-power offset, where the low-power offset is used for calculating the S value.

To describe the LP-WUS monitoring method provided in the embodiments of this application in detail, the following describes the method with reference to several specific embodiments.

Embodiment 1

In this embodiment, a system message provides an LP-WUS resource and an LP-SS, and a terminal determines the LP-WUS resource and the LP-SS. This embodiment includes the following steps.

Step 1: A terminal receives an LP-WUS configuration sent by a network, where the LP-WUS configuration is sent by using a system message.

The LP-WUS configuration includes a plurality of LP-WUS resources and a plurality of LP-SSs, where the LP-SS and at least one LP-WUS resource are in a same frequency or same time domain range.

Step 2: The terminal determines a target LP-WUS resource based on a UE ID.

An LP-WUS sequence number is determined by using the following formula:

$$\text{Sequence number of a target LP-WUS resource} = \text{UE\_ID mod N}$$

where N is an integer greater than 0, and is a quantity of the LP-WUS resources. The UE-ID is some or all bits (bits) of a 5G-S-TMSI or an LP-WUS ID. The LP-WUS ID is an identifier of an LP-WUS for being received by the terminal. The LP-WUS ID may be generated by the terminal based on the 5G-S-TMSI, or may be configured by the network.

Step 3: The terminal determines a target LP-SS.

The terminal may select an LP-SS corresponding to the target LP-WUS resource, for example, an LP-SS in a same frequency range or a same time domain range as the target LP-WUS resource.

In this embodiment, the plurality of LP-WUS resources are configured, so that a system capacity can be increased. In addition, an LP-SS corresponding to the LP-WUS resource is provided, to reduce complexity of monitoring the LP-SS by the terminal, reducing requirements of the terminal.

It should be noted that, the LP-WUS configuration may be configured based on a cell or configured based on an area. The area includes at least one cell. In a same area, the terminal monitors the LP-WUS on the target LP-WUS resource, or monitors the corresponding LP-SS, to reduce requirements of the terminal.

Embodiment 2

In this embodiment, a network side device configures a target LP-WUS resource or a target LP-SS, including the following steps:

Step 1: A terminal receives an LP-WUS configuration sent by a network side device. For example, the LP-WUS configuration is sent by using an RRC release message or the like.

The LP-WUS configuration includes a target LP-WUS resource or a target LP-SS to be monitored by the terminal.

Step 2: The terminal monitors an LP-WUS on a target LP-WUS resource, and monitors a target LP-SS.

In this embodiment, the network side device explicitly configures the LP-WUS resource and a corresponding LP-SS to the terminal. In this way, the terminal and the network side device synchronously use a specific LP-WUS resource and LP-SS, so that the network side device can better perform control and can efficiently use a radio resource while expanding a system capacity.

Embodiment 3

This embodiment mainly describes a method for configuring a plurality of LP-SSs, which is divided into a primary LP-SS and optionally, a plurality of secondary LP-SSs.

A terminal monitors at least one LP-SS.

In this embodiment, the network side device configures a plurality of LP-SSs, including:

(1) a first LP-SS, also referred to as a primary LP-SS or an anchor LP-SS, where the first LP-SS may be configured to carry a cell identifier, system information, a synchronization signal, a measurement reference signal, and the like; and

(2) a second LP-SS, also referred to as a secondary LP-SS, where the first LP-SS may be configured to carry a cell identifier, a synchronization signal, a measurement reference signal, and the like.

It may be understood that, the first LP-SS supports more functions, such as carrying system information, than the second LP-SS. The first LP-SS is used as a public LP-SS of a cell or an LP-WUS area.

The second LP-SS supports a measurement function, so that the terminal can monitor the LP-SS when monitoring the LP-WUS. In addition, a limited amount of information is carried in the second LP-SS, which is conducive to reducing a bit length sent by LP-SS and reducing a network load.

The terminal may determine the target LP-WUS resource and determine the corresponding target LP-SS based on Embodiment 1 or Embodiment 2. The target LP-SS may be the first LP-SS or the second LP-SS. For example, the terminal monitors the LP-WUS, and meanwhile performs the RRM measurement by monitoring the second LP-SS. In addition, the terminal optionally monitors the first LP-SS in time to obtain other information, such as the system information.

Embodiment 4

This embodiment mainly describes processing of configuring a plurality of LP-SSs. There may be a case in which a resource conflict occurs between an LP-SS and an LP-WUS.

If the LP-WUS and the LP-SS are sent in a same frequency domain, a network side device sends the LP-SS and the LP-WUS in time division. A terminal needs to monitor the LP-WUS and the LP-SS in time division.

To avoid an imbalanced impact on user groups monitoring a same LP-WUS resource, the network side device performs inter-carrier frequency hopping in LP-WUS resources to send the LP-SS.

Embodiment 5

This embodiment mainly describes relaxed measurement based on a low-power communication module or an LP-SS.

A terminal performs measurement based on a low-power communication module, an LP-WUS, or an LP-SS, including at least one of the following:

(1) performing, by the terminal, serving cell measurement or radio resource management RRM measurement by using a low-power communication module;
(2) performing, by the terminal, LP-WUS or LP-SS-based serving cell measurement; and
(3) performing, by the terminal, LP-WUS or LP-SS-based RRM measurement, where the RRM measurement includes serving cell RRM measurement or neighboring cell RRM measurement.

The terminal uses the low-power communication module to perform measurement based on the LP-SS, which may assist in serving cell measurement and RRM measurement of the main communication module, and cell selection, which is conducive to power saving of the terminal.

This embodiment may include a plurality of relaxed measurement criteria:

Relaxed measurement criterion 1: Relaxed measurement of a terminal with low mobility based on an LP-SS.

The terminal uses the low-power communication module to perform serving cell measurement based on the LP-SS, to obtain a low-power serving cell receiving strength (Srxlev-lowpower). When a reduction amplitude of a low-power serving cell receiving strength (Srxlev-lowpower) exceeds a threshold, measurement of the main communication module is enabled, including serving cell measurement or neighboring cell measurement. Based on this method, LP-SS measurement is used to replace the serving cell measurement on the main communication module, which is conducive to energy saving of the terminal.

In an implementation, specifically, the low-power communication module is used to perform serving cell measurement based on the LP-SS. It is considered that a low-mobility relaxed measurement criterion based on an LP-SS is satisfied if a difference between the low-power serving cell receiving strength (Srxlev-lowpower) and the low-power reference serving cell receiving strength (Srxlev$_{Ref}$-lowpower) is less than or equal to $S_{SearchDeltaP}$-lowpower. The low-power serving cell receiving strength is: a serving cell receiving strength measured by using the low-power communication module.

That is, $-(Srxlev_{Ref}\text{-lowpower} - Srxlev\text{-lowpower}) \leq S_{SearchDeltaP}\text{-lowpower}$.

The low-mobility relaxed measurement criterion based on the LP-SS may also be referred to as a low-power low-mobility relaxed measurement criterion.

The terminal sets the low-power reference serving cell receiving strength to a current low-power serving cell receiving strength in a case that one of the following conditions is satisfied:

(1) after a new cell or area is selected or reselected;
(2) if the low-power serving cell receiving strength is greater than a low-power reference serving cell receiving strength, that is, (Srxlev-lowpower-Srxlev$_{ref}$-lowpower)>0;
(3) if duration for which relaxed measurement criterion is not satisfied reaches duration of a fluctuation monitoring window (TsearchDeltaP-lowPower) of low-power measurement;
(4) after a main communication module-based relaxed measurement criterion is satisfied; or
(5) after performing of relaxed measurement is started.

Based on this method, it is easier to define a low-power reference serving cell receiving strength, which is suitable for the terminal to use an LP-SS-based serving cell measurement during measurement criterion evaluation.

The low-mobility terminal includes a static terminal.

Relaxed measurement criterion 2: Relaxed measurement of a not-at-cell-edge terminal based on an LP-SS.

The terminal uses the low-power communication module to perform serving cell measurement based on the LP-SS, to obtain a low-power serving cell receiving strength (Srxlev-lowpower). When a low-power serving cell receiving strength (Srxlev-lowpower) is not greater than a threshold, measurement of the main communication module is enabled, including serving cell measurement or neighboring cell measurement. Based on this method, LP-SS measurement is used to replace the serving cell measurement on the main communication module, which is conducive to energy saving of the terminal.

Specifically, the low-power communication module is used to perform serving cell measurement based on the LP-SS. it is considered that relaxed measurement criterion of a terminal not at cell edge based on an LP-SS is satisfied, if the low-power serving cell receiving strength (Srxlev-lowpower) is greater than ($S_{SearchThresholdP}$-lowpower).

The relaxed measurement of the not-at-cell-edge terminal based on the LP-SS may also be referred to as a low-power not-at-cell-edge relaxed measurement criterion.

Relaxed measurement method: The terminal may select to perform a target relaxed measurement operation in a case that at least one of the following conditions is satisfied:

(1) an indication instructing the low-power communication module to relax measurement of a main communication module is configured;
(2) information instructing the terminal to perform low-mobility relaxed measurement evaluation based on measurement of the low-power communication module is configured;
(3) the low-power low-mobility relaxed measurement criterion is satisfied;
(4) information instructing the terminal to perform not-at-cell-edge relaxed measurement evaluation based on measurement of the low-power communication module is configured;
(5) a low-power not-at-cell-edge relaxed measurement criterion is satisfied; and
(6) duration for which the terminal already performs LP-WUS or LP-SS-based serving cell measurement or neighboring cell measurement reaches at least the duration of the fluctuation monitoring window of the low-power measurement (TsearchDeltaP-lowPower).

The relaxed measurement operation includes at least one of the following.

(1) Relax serving cell measurement performed by using the main communication module. For example, a period of the serving cell measurement performed by the main communication module is extended, which is conducive to power saving of the terminal.
(2) Relax RRM measurement performed by using the main communication module. For example, a period of the RRM measurement performed by the main communication module is extended, or the main communication module does not perform some or performs none of the RRM measurement within one or several periods of time, which is conducive to power saving of the terminal. The RRM measurement includes measurement on an intra-frequency cell, an NR inter-frequency cell, an inter-system frequency cell, or the like.
(3) Relax serving cell measurement performed by using the low-power communication module. For example, a period of the serving cell measurement performed by the low-power communication module is extended, which is conducive to power saving of the terminal.
(4) Relax RRM measurement performed by using the low-power communication module. For example, a period of the RRM measurement performed by the low-power communication module is extended, or the low-power communication module does not perform some or performs none of the RRM measurement within one or several periods of time, which is conducive to power saving of the terminal. The RRM measurement includes measurement on an intra-frequency cell, an NR inter-frequency cell, an inter-system frequency cell, or the like.
(5) Perform RRM measurement by using the low-power communication module. The RRM measurement includes measurement on an intra-frequency cell, an NR inter-frequency cell, an inter-system frequency cell, or the like. In other words, the RRM measurement based on the main communication module is replaced with the RRM measurement based on the low-power communication module, which is conducive to power saving of the terminal.
(6) During measurement evaluation performed by the low-power communication module, the main communication module is in a sleep or closed state. In this operation, both the serving cell measurement and the RRM measurement are performed based on the low-power communication module.

Optionally, before performing evaluation of the foregoing measurement relaxing criterion, the terminal may further receive a relaxed measurement configuration sent by the network side device, for example, receive the relaxed measurement configuration by using system information. The relaxed measurement configuration includes at least one of the following:

(1) information instructing to relax, based on measurement of the low-power communication module, measurement of the main communication module, which facilitates control by the network whether to perform relaxed measurement of the main communication module based on low-power communication module measurement, where For example, when LP-SS signal deployment matches cell coverage, the network supports the terminal in inferring a cell signal strength or a cell coverage based on LP-SS measurement, thereby saving power of the terminal.
(2) information instructing the terminal to perform low-mobility relaxed measurement evaluation based on measurement of the low-power communication module;
(3) information instructing the terminal to perform not-at-cell-edge relaxed measurement evaluation based on measurement of the low-power communication module;

(4) a first threshold ($S_{searchDeltaP}$-LowPower), used for representing a threshold of a received signal strength of a serving cell measured by the low-power communication module defined for relaxed measurement;

(5) a low-power serving cell receiving strength threshold ($S_{SearchThresholdP}$-lowpower), used for representing a threshold of the received signal strength of the serving cell measured by the low-power communication module defined for relaxed measurement; and

(6) duration of the fluctuation monitoring window of the low-power measurement (TsearchDeltaP-lowPower), used for representing relaxed measurement evaluation duration of fluctuation of the received signal strength of the serving cell measured by the low-power communication module.

The foregoing relaxed measurement configuration may alternatively be agreed on by using a protocol.

Embodiment 6

This embodiment mainly describes cell selection or reselection based on a low-power communication module or an LP-SS.

The terminal uses the low-power communication module to perform measurement based on the LP-SS, which may assist in cell selection, and is conducive to power saving of the terminal.

Method 1: Define a target criterion: a low-power cell selection criterion, or a low-power cell reselection criterion.

Criterion 1: low-power serving cell receiving strength Srxlev-lowpower>second threshold. The low-power serving cell receiving strength is: a serving cell receiving strength measured by using the low-power communication module.

To camp on a current cell or area, the terminal needs to satisfy one of the following conditions:

(1) The criterion 1 is satisfied.

(2) Cell selection based on measurement of a low-power communication module or an LP-SS is configured.

Criterion 2: low-power serving cell receiving strength Srxlev-lowpower<third threshold.

When a target condition is satisfied, the terminal performs a target operation. The target condition includes at least one of the following:

(1) An indication of cell-reselection evaluation based on measurement of a low-power communication module or LP-SS is configured.

(2) The criterion 2 is satisfied.

The target operation includes at least one of the following:

(1) Starting RRM measurement based on a low-power communication module, such as intra-frequency cell measurement, NR inter-frequency cell measurement, or inter-system frequency cell measurement, which facilitates triggering, based on an LP-SS signal strength, of neighboring cell measurement. In this case, satisfying the low-power cell selection criterion corresponds to satisfying the cell reselection criterion.

(2) Serving cell measurement or RRM measurement based on a main communication module, which facilitates determining of a cell reselection criterion or a cell selection criterion based on serving cell measurement.

(3) An evaluation process of cell reselection.

Optionally, before performing evaluation of the low-power cell selection criterion or low-power cell reselection criterion, the terminal receives a target configuration, for example, receives a target configuration by using system information. At least one of the following is included:

(1) a second threshold, where the second threshold is used for evaluating whether a current cell or area is capable of being camped on;

(2) a third threshold, where the third threshold is used for evaluating whether to start to use the low-power communication module or the main communication module to perform RRM measurement;

(3) information instructing cell selection based on low-power communication module measurement or an LP-SS;

(4) information instructing to perform cell-reselection evaluation based on measurement of the low-power communication module or LP-SS-based measurement; and

(5) a low-power offset (lowpower-Offset). The terminal calculates Srxlev (that is, the S value) based on the low-power offset and a value of Srelev-LowPower.

For example, Srxlev = Srxlev-lowpower + lowpower-Offset. For example, when Srxlev > 0, the cell selection criterion is satisfied.

Method 2: Calculate the S value based on low-power communication module measurement.

The terminal receives a target configuration, for example, receives a target configuration by using system information. A low-power offset (lowpower _Offset) is included. The terminal calculates Srxlev based on the low-power offset and a value of Srelev-LowPower.

$$Srxlev = Srxlev\_lowpower + lowpower\_Offset$$

For example, when Srxlev > 0, the cell selection criterion is satisfied.

Based on this method, the terminal calculates the S value based on low-power communication module measurement, to conveniently reuse a cell selection criterion, a cell reselection criterion, and the like of the main communication module, facilitating energy saving of the terminal and simplifying implementation of the terminal.

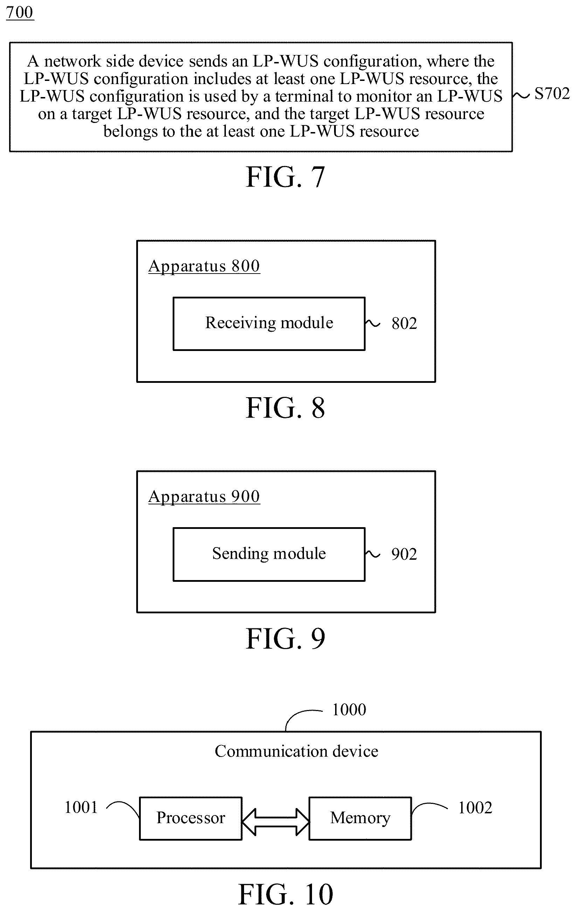

The LP-WUS monitoring method according to the embodiments of this application is described in detail above with reference to FIG. 2 to FIG. 6. An LP-WUS monitoring method according to another embodiment of this application is described in detail below with reference to FIG. 7. It can be understood that the interaction between a network side device and a terminal described from the perspective of the network side device is the same as or corresponds to that described from the perspective of the terminal side in the method shown in FIG. 2. To avoid repetition, relevant descriptions are appropriately omitted.

FIG. 7 is a schematic flowchart of implementation of an LP-WUS monitoring method according to an embodiment of this application. The method may be applied to a network side device. As shown in FIG. 7, a method 700 includes the following steps.

S702: A network side device sends an LP-WUS configuration, where the LP-WUS configuration includes at least one LP-WUS resource, the LP-WUS configuration is used by a terminal to monitor an LP-WUS on a target LP-WUS resource, and the target LP-WUS resource belongs to the at least one LP-WUS resource.

In this embodiment of this application, the network side device sends the LP-WUS configuration, and the LP-WUS configuration includes at least one LP-WUS resource, so that the terminal can monitor the LP-WUS on the target LP-WUS resource based on the LP-WUS configuration, so that the terminal achieves power consumption saving by receiving the LP-WUS. In addition, the LP-WUS configuration may include a plurality of LP-WUS resources, and the terminal may be pre-allocated to monitor one of the LP-WUS resources, thereby increasing a cell capacity and facilitating measurement by the terminal.

Optionally, in an embodiment, the LP-WUS configuration further includes at least one LP-SS, the LP-WUS configuration is further used by the terminal to monitor a target LP-SS, and the target LP-SS belongs to the at least one LP-SS.

Optionally, in an embodiment, the LP-SS includes a first LP-SS and a second LP-SS, where the first LP-SS includes at least one of the following: a cell identifier, a system message indication, time information, and synchronization information, and the first LP-SS supports a measurement function; and the second LP-SS supports a measurement function.

Optionally, in an embodiment, the method satisfies at least one of the following:

    (1) the target LP-WUS resource and the target LP-SS occupy a same frequency domain position;
    (2) the network-side device sends the LP-WUS and the target LP-SS in time division; and (3) The target LP-SS is subjected to inter-carrier frequency hopping transmission in the target LP-WUS resource.

Optionally, in an embodiment, the LP-WUS configuration includes a plurality of LP-WUS resources and one LP-SS, the terminal is configured to monitor the LP-WUS on the target LP-WUS resource and monitor the target LP-SS based on the LP-WUS configuration, and the target LP-SS is the one LP-SS; the LP-WUS configuration includes a plurality of LP-WUS resources and a plurality of LP-SSs, one LP-SS is in a same time domain range as at least one LP-WUS resource corresponding to the LP-SS, and the terminal is configured to monitor the LP-WUS on the target LP-WUS resource based on the LP-WUS configuration, and monitor a target LP-SS in a same time domain range as the target LP-WUS resource; or the LP-WUS configuration includes a plurality of LP-WUS resources and a plurality of LP-SSs, one LP-SS is in a same frequency domain range as at least one LP-WUS resource corresponding to the LP-SS, and the terminal is configured to monitor the LP-WUS on the target LP-WUS resource based on the LP-WUS configuration, and monitor a target LP-SS in a same frequency domain range as the target LP-WUS resource.

Optionally, in an embodiment, the method further includes: determining the target LP-WUS resource or the target LP-SS corresponding to the terminal based on at least one of the following: (1) at least one of the following of the target LP-WUS resource or the target LP-SS in the LP-WUS configuration: an identifier, time-frequency domain resource information, and a frequency; or (2) a target rule, where the target rule is related to an identifier of the terminal.

Optionally, in an embodiment, the LP-WUS configuration is transmitted by using a system message; or the LP-WUS configuration is transmitted by using an RRC release message.

Optionally, in an embodiment, the method further includes: sending, by the network side device, a relaxed measurement configuration, where the relaxed measurement configuration includes at least one of the following: (1) information instructing to relax, based on measurement of the low-power communication module, measurement of the main communication module; (2) information instructing the terminal to perform low-mobility relaxed measurement evaluation based on measurement of the low-power communication module; (3) information instructing the terminal to perform not-at-cell-edge relaxed measurement evaluation based on measurement of the low-power communication module; (4) a first threshold, where the first threshold is used for representing a threshold of a received signal strength of a serving cell measured by the low-power communication module defined for relaxed measurement; (5) a low-power serving cell receiving strength threshold, where the low-power serving cell receiving strength threshold is used for representing a threshold of the received signal strength of the serving cell measured by the low-power communication module defined for relaxed measurement; and (6) duration of the fluctuation monitoring window of the low-power measurement, where the duration of the fluctuation monitoring window of the low-power measurement is used for representing: relaxed measurement evaluation duration of fluctuation of the received signal strength of the serving cell measured by the low-power communication module.

Optionally, in an embodiment, the method further includes: sending, by the network side device, a target configuration, where the target configuration includes at least one of the following: (1) a second threshold, where the second threshold is used for evaluating whether a current cell or area is capable of being camped on; (2) a third threshold, where the third threshold is used for evaluating whether to start to use the low-power communication module or the main communication module to perform RRM measurement; (3) information instructing to perform cell selection based on measurement of the low-power communication module; (4) information instructing to perform cell-reselection evaluation based on measurement of the low-power communication module or LP-SS-based measurement; and (5) the low-power offset, where the low-power offset is used for calculating the S value.

The LP-WUS monitoring method provided in this embodiment of this application may be performed by an LP-WUS monitoring apparatus. In this embodiment of this application, the LP-WUS monitoring apparatus provided in the embodiments of this application is described by using an example in which the LP-WUS monitoring apparatus performs the LP-WUS monitoring method.

FIG. 8 is a schematic structural diagram of an LP-WUS monitoring apparatus according to an embodiment of this application. The apparatus may correspond to the terminal in other embodiments. As shown in FIG. 8, the apparatus 800 includes the following modules.

A receiving module 802 is configured to receive an LP-WUS configuration, where the LP-WUS configuration includes at least one LP-WUS resource.

The receiving module 802 is further configured to monitor an LP-WUS on a target LP-WUS resource based on the LP-WUS configuration, where the target LP-WUS resource belongs to the at least one LP-WUS resource.

In this embodiment of this application, the receiving module receives the LP-WUS configuration, where the LP-WUS configuration includes the at least one LP-WUS resource, and monitors the target LP-WUS resource based on the LP-WUS configuration, thereby achieving power consumption saving by receiving the LP-WUS. In addition, the LP-WUS configuration may include a plurality of LP-WUS resources, and the apparatus may be pre-allocated to monitor one of the LP-WUS resources, thereby increasing a cell capacity and facilitating measurement.

Optionally, in an embodiment, the LP-WUS configuration further includes at least one LP-SS, and the receiving module 802 is further configured to monitor a target LP-SS based on the LP-WUS configuration, and the target LP-SS belongs to the at least one LP-SS.

Optionally, in an embodiment, the LP-WUS configuration includes a plurality of LP-WUS resources and one LP-SS, the apparatus monitors the LP-WUS on the target LP-WUS resource and monitors the target LP-SS based on the LP-WUS configuration, and the target LP-SS is the one LP-SS; the LP-WUS configuration includes a plurality of LP-WUS resources and a plurality of LP-SSs, one LP-SS is in a same time domain range as at least one LP-WUS resource corresponding to the LP-SS, and the apparatus monitors the LP-WUS on the target LP-WUS resource based on the LP-WUS configuration, and monitors a target LP-SS in a same time domain range as the target LP-WUS resource; or the LP-WUS configuration includes a plurality of LP-WUS resources and a plurality of LP-SSs, one LP-SS is in a same frequency domain range as at least one LP-WUS resource corresponding to the LP-SS, and the apparatus monitors the LP-WUS on the target LP-WUS resource based on the LP-WUS configuration, and monitors a target LP-SS in a same frequency domain range as the target LP-WUS resource.

Optionally, in an embodiment, the receiving module 802 is further configured to perform at least one of the following:(1) serving cell measurement or RRM measurement by using a low-power communication module; (2) LP-WUS or LP-SS-based serving cell measurement; and (3) LP-WUS or LP-SS-based RRM measurement, where the RRM measurement includes serving cell RRM measurement or neighboring cell RRM measurement.

Optionally, in an embodiment, it is considered that a low-power low-mobility relaxed measurement criterion is satisfied if a difference between a first serving cell receiving strength and a low-power reference serving cell receiving strength is less than or equal to a first threshold; or it is considered that a relaxed measurement criterion of a low-power not-at-cell-edge apparatus is satisfied if a first serving cell receiving strength is greater than a low-power serving cell receiving strength threshold, where the first serving cell receiving strength is a serving cell receiving strength measured by using a low-power communication module.

Optionally, in an embodiment, the apparatus further includes a processing module, configured to select performing a target relaxed measurement when at least one of the following is satisfied: (1) an indication instructing the low-power communication module to relax measurement of a main communication module is configured; (2) information instructing the terminal to perform low-mobility relaxed measurement evaluation based on measurement of the low-power communication module is configured; (3) a low-power low-mobility relaxed measurement criterion is satisfied; (4) information instructing the terminal to perform not-at-cell-edge relaxed measurement evaluation based on measurement of the low-power communication module is configured; (5) a low-power not-at-cell-edge relaxed measurement criterion is satisfied; and (6) duration for which the apparatus already performs LP-WUS or LP-SS-based serving cell measurement or neighboring cell measurement reaches at least the duration of the fluctuation monitoring window of the low-power measurement.

Optionally, in an embodiment, the receiving module 802 is further configured to perform cell selection or reselection based on measurement of the low-power communication module.

Optionally, in an embodiment, the apparatus further includes a processing module, configured to perform at least one of the following: (1) camping on a current cell or area in a case that at least one of the following conditions is satisfied: a first serving cell receiving strength is greater than a second threshold; or cell selection based on measurement of a low-power communication module is configured; and (2) performing a target operation in a case that at least one of the following conditions is satisfied: a first serving cell receiving strength is less than a third threshold; or an indication of cell-reselection evaluation based on measurement of a low-power communication module is configured, where the first serving cell receiving strength is a serving cell receiving strength measured by using a low-power communication module.

For the apparatus 800 according to this embodiment of this application, refer to the procedure of the method 200 corresponding to the embodiments of this application. In addition, each unit/module in the apparatus 800 and the foregoing other operations and/or functions are respectively used to implement corresponding procedures in the method 200 and can achieve the same or equivalent technical effects. For brevity, details are not described herein again.

The LP-WUS monitoring apparatus in this embodiment of this application may be an electronic device, for example, an electronic device having an operating system, or a component in an electronic device, such as an integrated circuit or a chip. The electronic device may be a terminal or another device other than the terminal. For example, the terminal may include, but is not limited to, the type of the terminal 11 listed above, and the another device may be a server, a network attached storage (Network Attached Storage, NAS) or the like, which is not specifically limited in this embodiment of this application.

FIG. 9 is a schematic structural diagram of an LP-WUS monitoring apparatus according to an embodiment of this application. The apparatus may correspond to the network side device in other embodiments. As shown in FIG. 9, the apparatus 900 includes the following modules.

A sending module 902 is configured to send an LP-WUS configuration, where the LP-WUS configuration includes at least one LP-WUS resource, the LP-WUS configuration is used by a terminal to monitor an LP-WUS on a target LP-WUS resource, and the target LP-WUS resource belongs to the at least one LP-WUS resource.

In this embodiment of this application, the sending module sends the LP-WUS configuration, and the LP-WUS configuration includes at least one LP-WUS resource, so that the terminal can monitor the LP-WUS on the target LP-WUS resource based on the LP-WUS configuration, so that the terminal achieves power consumption saving by receiving the LP-WUS. In addition, the LP-WUS configuration may include a plurality of LP-WUS resources, and the terminal may be pre-allocated to monitor one of the LP-WUS resources, thereby increasing a cell capacity and facilitating measurement by the terminal.

Optionally, in an embodiment, the LP-WUS configuration further includes at least one LP-SS, the LP-WUS configuration is further used by the terminal to monitor a target LP-SS, and the target LP-SS belongs to the at least one LP-SS.

Optionally, in an embodiment, the LP-SS includes a first LP-SS and a second LP-SS, where the first LP-SS includes at least one of the following: a cell identifier, a system message indication, time information, and synchronization information, and the first LP-SS supports a measurement function; and the second LP-SS supports a measurement function.

Optionally, in an embodiment, at least one of the following is satisfied: (1) the target LP-WUS resource and the target LP-SS occupy a same frequency domain position; (2) the sending module 902 sends the LP-WUS and the target LP-SS in time division; and (3) the target LP-SS is subjected to inter-carrier frequency hopping transmission in the target LP-WUS resource.

Optionally, in an embodiment, the LP-WUS configuration includes a plurality of LP-WUS resources and one LP-SS, the terminal is configured to monitor the LP-WUS on the target LP-WUS resource and monitor the target LP-SS based on the LP-WUS configuration, and the target LP-SS is the one LP-SS; the LP-WUS configuration includes a plurality of LP-WUS resources and a plurality of LP-SSs, one LP-SS is in a same time domain range as at least one LP-WUS resource corresponding to the LP-SS, and the terminal is configured to monitor the LP-WUS on the target LP-WUS resource based on the LP-WUS configuration, and monitor a target LP-SS in a same time domain range as the target LP-WUS resource; or the LP-WUS configuration includes a plurality of LP-WUS resources and a plurality of LP-SSs, one LP-SS is in a same frequency domain range as at least one LP-WUS resource corresponding to the LP-SS, and the terminal is configured to monitor the LP-WUS on the target LP-WUS resource based on the LP-WUS configuration, and monitor a target LP-SS in a same frequency domain range as the target LP-WUS resource.

Optionally, in an embodiment, the apparatus further includes a determining module, configured to determine the target LP-WUS resource or the target LP-SS corresponding to the terminal based on at least one of the following: (1) at least one of the following of the target LP-WUS resource or the target LP-SS in the LP-WUS configuration: an identifier, time-frequency domain resource information, and a frequency; or (2) a target rule, where the target rule is related to an identifier of the terminal.

Optionally, in an embodiment, the LP-WUS configuration is transmitted by using a system message; or the LP-WUS configuration is transmitted by using an RRC release message.

Optionally, in an embodiment, the sending module 902 is further configured to send a relaxed measurement configuration, where the relaxed measurement configuration includes at least one of the following: (1) information instructing to relax, based on measurement of the low-power communication module, measurement of the main communication module; (2) information instructing the terminal to perform low-mobility relaxed measurement evaluation based on measurement of the low-power communication module; (3) information instructing the terminal to perform not-at-cell-edge relaxed measurement evaluation based on measurement of the low-power communication module; (4) a first threshold, where the first threshold is used for representing a threshold of a received signal strength of a serving cell measured by the low-power communication module defined for relaxed measurement; (5) a low-power serving cell receiving strength threshold, where the low-power serving cell receiving strength threshold is used for representing a threshold of the received signal strength of the serving cell measured by the low-power communication module defined for relaxed measurement; and (6) duration of the fluctuation monitoring window of the low-power measurement, where the duration of the fluctuation monitoring window of the low-power measurement is used for representing: relaxed measurement evaluation duration of fluctuation of the received signal strength of the serving cell measured by the low-power communication module.

Optionally, in an embodiment, the sending module 902 is further configured to send a target configuration, where the target configuration includes at least one of the following: (1) a second threshold, where the second threshold is used for evaluating whether a current cell or area is capable of being camped on; (2) a third threshold, where the third threshold is used for evaluating whether to start to use the low-power communication module or the main communication module to perform RRM measurement; (3) information instructing to perform cell selection based on measurement of the low-power communication module; (4) information instructing to perform cell-reselection evaluation based on measurement of the low-power communication module or LP-SS-based measurement; and (5) the low-power offset, where the low-power offset is used for calculating the S value.

For the apparatus 900 according to this embodiment of this application, refer to the procedure of the method 700 corresponding to the embodiments of this application. In addition, each unit/module in the apparatus 900 and the foregoing other operations and/or functions are respectively used to implement corresponding procedures in the method 700 and can achieve the same or equivalent technical effects. For brevity, details are not described herein again.

The LP-WUS monitoring apparatus provided in this embodiment of this application can implement the processes implemented in the method embodiment of FIG. 2 to FIG. 7, and can achieve the same technical effects. To avoid repetition, details are not described herein again.

Optionally, as shown in FIG. 10, an embodiment of this application further provides a communication device 1000, including a processor 1001 and a memory 1002. The memory 1002 stores a program or instructions runnable on the processor 1001. For example, when the communication device 1000 is a terminal, the program or the instructions, when executed by the processor 1001, implement the steps in the embodiments of the LP-WUS monitoring method, and can achieve the same technical effects. When the communication device 1000 is a network side device, the program or the instructions, when executed by the processor 1001, implement the steps in the embodiments of the LP-WUS monitoring method, and can achieve the same technical effects. To avoid repetition, details are not described herein again.

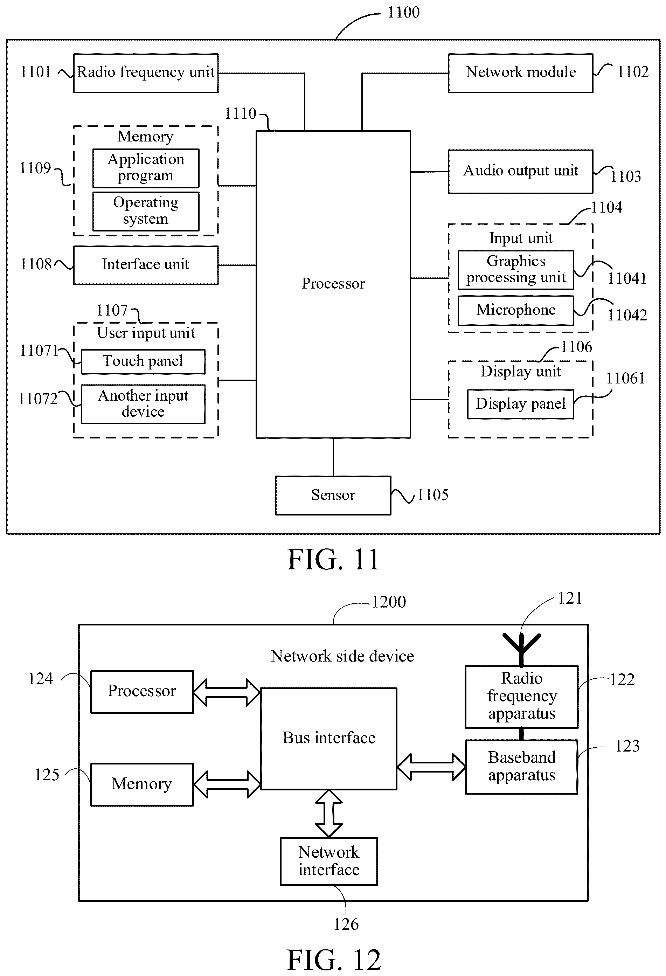

An embodiment of this application further provides a terminal, including a processor and a communication interface. The communication interface is configured to receive an LP-WUS configuration, where the LP-WUS configuration includes at least one LP-WUS resource; and monitor an LP-WUS on a target LP-WUS resource based on the LP-WUS configuration, where the target LP-WUS resource belongs to the at least one LP-WUS resource. The terminal embodiment corresponds to the foregoing terminal side method embodiment, all implementation processes and implementations of the foregoing method embodiment are applicable to the terminal embodiment, and the same technical effects can be achieved. Specifically, FIG. 11 is a schematic diagram of a hardware structure of a terminal that implements an embodiment of this application.

A terminal 1100 includes, but is not limited to, at least some parts of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (such as a battery) for supplying power to the components. The power supply may be logically connected to the processor 1110 by using a power supply management system, thereby implementing functions, such as charging, discharging, and power consumption management, by using the power supply management system. The terminal structure shown in FIG. 11 constitutes no limitation on the terminal, and the terminal may include more or fewer components than those shown in the figure, or combine some components, or have different component arrangements.

It should be understood that, in this embodiment of this application, the input unit 1104 may include a graphics processing unit (Graphics Processing Unit, GPU) 11041 and a microphone 11042. The graphics processing unit 11041 performs processing on image data of a static picture or a video that is obtained by an image acquisition device (for example, a camera) in a video acquisition mode or an image acquisition mode. The display unit 1106 may include a display panel 11061, and the display panel 11061 may be configured by using a liquid crystal display, an organic light-emitting diode, or the like. The user input unit 1107 includes at least one of a touch panel 11071 and another input device 11072. The touch panel 11071 is also referred to as a touch screen. The touch panel 11071 may include two parts: a touch detection apparatus and a touch controller. The another input device 11072 may include, but is not limited to, a physical keyboard, a function key (such as a volume control key or an on/off key), a trackball, a mouse, and a joystick. Details are not described herein again.

In this embodiment of this application, after receiving downlink data from a network side device, the radio frequency unit 1101 may transmit the downlink data to the processor 1110 for processing. In addition, the radio frequency unit 1101 may send uplink data to the network side device. Generally, the radio frequency unit 1101 includes, but is not limited to, an antenna, an amplifier, a transceiver, a coupler, a low noise amplifier, a duplexer, and the like.

The memory 1109 may be configured to store a software program or instruction and various data. The memory 1109 may mainly include a first storage area for storing a program or instructions and a second storage area for storing data. The first storage area may store an operating system, an application program or instructions required by at least one function (such as a sound playback function and an image playback function), or the like. In addition, the memory 1109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 in this embodiment of this application includes, but is not limited to, the memories and any other memory of a suitable type.

The processor 1110 may include one or more processing units. Optionally, the processor 1110 integrates an application processor and a modem processor. The application processor mainly processes operations related to an operating system, a user interface, an application program, and the like. The modem processor mainly processes a wireless communication signal, such as a baseband processor. It may be understood that, the modem processor may not be integrated into the processor 1110.

The radio frequency unit 1101 may be configured to receive an LP-WUS configuration, and the LP-WUS configuration includes at least one LP-WUS resource; and monitor an LP-WUS on a target LP-WUS resource based on the LP-WUS configuration, where the target LP-WUS resource belongs to the at least one LP-WUS resource.

In the embodiments of this application, a terminal receives an LP-WUS configuration, where the LP-WUS configuration includes at least one LP-WUS resource, and the terminal monitors an LP-WUS on a target LP-WUS resource based on the LP-WUS configuration, so that the terminal achieves power consumption saving by receiving the LP-WUS. In addition, the LP-WUS configuration may include a plurality of LP-WUS resources, and the terminal may be pre-allocated to monitor one of the LP-WUS resources, thereby increasing a cell capacity and facilitating measurement by the terminal.

It may be understood that, for implementation processes of the implementations mentioned in this embodiment, refer to related descriptions of monitoring the LP-WUS in the method embodiments. The same or equivalent technical effects can be achieved. To avoid repetition, details are not described herein again.

An embodiment of this application further provides a network side device, including a processor and a communication interface, where the communication interface is configured to send an LP-WUS configuration, the LP-WUS configuration including at least one LP-WUS resource, the LP-WUS configuration is used by a terminal to monitor an LP-WUS on a target LP-WUS resource, and the target LP-WUS resource belongs to the at least one LP-WUS resource. The network side device embodiment corresponds to the foregoing method embodiment of the network side device, all implementation processes and implementations of the foregoing method embodiment are applicable to the network side device embodiment, and the same technical effect can be achieved.

An embodiment of this application further provides a network side device. As shown in FIG. 12, a network side device 1200 includes: an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes the information to be sent and sends the information to the radio frequency apparatus 122. The radio frequency apparatus 122 processes the received information and sends the information out through the antenna 121.

The method performed by the network side device in the foregoing embodiment may be implemented in the baseband apparatus 123. The baseband apparatus 123 includes a baseband processor.

The baseband apparatus 123 may include, for example, at least one baseband board. A plurality of chips are disposed on the baseband board, as shown in FIG. 12. One of the chips is, for example, a baseband processor, and is connected to the memory 125 through a bus interface to invoke a program in the memory 125, to perform the operations of a network device shown in the foregoing method embodiment.

The network side device may further include a network interface 126. The interface is, for example, a common public radio interface (Common Public Radio Interface, CPRI).

The network side device 1200 in this embodiment of this application further includes: instructions or a program stored in the memory 125 and runnable on the processor 124, and the processor 124 invokes the instructions or the program stored in the memory 125 to perform the method executed by various modules shown in FIG. 9, and can achieve the same technical effects. To avoid repetition, details are not described herein again.

An embodiment of this application further provides a readable storage medium. The readable storage medium stores a program or instructions. The program or the instructions, when executed by a processor, implement the processes of the foregoing LP-WUS monitoring method embodiments, and the same technical effects can be achieved. To avoid repetition, details are not described herein.

The processor is the processor in the terminal in the embodiments described above. The readable storage medium may be non-volatile or non-transient. The readable storage medium includes a computer-readable storage medium, for example, a computer read-only memory ROM, a random access memory RAM, a magnetic disk, an optical disc, or the like. In some examples, the readable storage medium may be a non-transient readable storage medium.

An embodiment of this application further provides a chip. The chip includes a processor and a communication interface. The communication interface is coupled to the processor. The processor is configured to run a program or an instruction, to implement the processes of the foregoing LP-WUS monitoring method embodiments, and can achieve the same technical effect. To avoid repetition, details are not described herein again.

It should be understood that, the chip mentioned in this embodiment of this application may also be referred to as a system level chip, a system chip, a chip system, or a system on chip.

An embodiment of this application further provides a computer program/program product. The computer program/program product is stored in a storage medium. The computer program/program product is executed by at least one processor to implement the processes of the foregoing LP-WUS monitoring method embodiments, and can achieve the same technical effect. To avoid repetition, details are not described herein again.

An embodiment of this application further provides an LP-WUS monitoring system, including a terminal and a network side device. The terminal may be configured to perform the steps of the LP-WUS monitoring method, and the network side device may be configured to perform the foregoing steps of the LP-WUS monitoring method.

It should be noted that, the terms "include", "comprise", or any other variation thereof herein are intended to cover a non-exclusive inclusion, so that a process, method, article, or apparatus that includes a series of elements not only includes those elements, but also includes other elements that are not explicitly listed or are inherent to the process, method, article, or apparatus. Without further limitations, the element limited by the statement "including a..." does not preclude the presence of another identical element in a process, method, article, or apparatus that includes that element. In addition, it should be noted that, the scope of the methods and apparatuses in the implementations of this application is not limited to performing functions in the order shown or discussed, but may also include performing functions in a substantially simultaneous manner or in a reverse sequence according to the involved functions. For example, the described methods may be performed in a different order from the described order, and various steps may further be added, omitted, or combined. Moreover, features described with reference to some examples may be combined in another example.

According to the descriptions of the foregoing implementations, a person skilled in the art may clearly learn that the method according to the foregoing embodiment may be implemented by a computer software product in addition to a necessary universal hardware platform, or by using hardware. The computer software product is stored in a storage medium (for example, a ROM, a RAM, a magnetic disk, an optical disc, or the like) including several instructions, to enable a terminal or a network side device to perform the methods described in the embodiments of this application.

Embodiments of this application are described with reference to the accompanying drawings. This application is not limited to the specific implementations described above, and the specific implementations described above are merely examples and not limited. A person of ordinary skill in the art may also make various forms of implementations under the inspiration of this application and without departing from the purpose of this application and the protection scope of the claims, and such implementations shall all fall within the protection scope of this application.

**Claims**

1. A low-power wake-up signal LP-WUS monitoring method, comprising:

   receiving, by a terminal, an LP-WUS configuration, wherein the LP-WUS configuration comprises at least one LP-WUS resource; and
   monitoring, by the terminal, an LP-WUS on a target LP-WUS resource based on the LP-WUS configuration, wherein the target LP-WUS resource belongs to the at least one LP-WUS resource.

2. The method according to claim 1, wherein the LP-WUS configuration further comprises at least one low-power synchronization signal LP-SS, and the method further comprises:
   monitoring, by the terminal, a target LP-SS based on the LP-WUS configuration, wherein the target LP-SS belongs to the at least one LP-SS.

3. The method according to claim 2, wherein the LP-SS comprises a first LP-SS and a second LP-SS, wherein

   the first LP-SS comprises at least one of the following: a cell identifier, a system message indication, time information, and synchronization information, and the first LP-SS supports a measurement function; and
   the second LP-SS supports a measurement function.

4. The method according to claim 2, wherein the method satisfies at least one of the following:

   the target LP-WUS resource and the target LP-SS occupy a same frequency domain position;
   the terminal monitors the LP-WUS and the target LP-SS in time division; and
   the target LP-SS is subjected to inter-carrier frequency hopping transmission in the target LP-WUS resource.

5. The method according to any one of claims 1 to 4, wherein

   the LP-WUS configuration comprises a plurality of LP-WUS resources and one LP-SS, the terminal monitors the LP-WUS on the target LP-WUS resource and monitors the target LP-SS based on the LP-WUS configuration, and the target LP-SS is the one LP-SS; or
   the LP-WUS configuration comprises a plurality of LP-WUS resources and a plurality of LP-SSs, one LP-SS is in a same time domain range as at least one LP-WUS resource corresponding to the LP-SS, and the terminal monitors the LP-WUS on the target LP-WUS resource based on the LP-WUS configuration, and monitors a target LP-SS in a same time domain range as the target LP-WUS resource; or
   the LP-WUS configuration comprises a plurality of LP-WUS resources and a plurality of LP-SSs, one LP-SS is in a same frequency domain range as at least one LP-WUS resource corresponding to the LP-SS, and the terminal monitors the LP-WUS on the target LP-WUS resource based on the LP-WUS configuration, and monitors a target LP-SS in a same frequency domain range as the target LP-WUS resource.

6. The method according to claim 5, wherein the method further comprises: determining, by the terminal, the target LP-WUS resource or the target LP-SS based on at least one of the following:

   at least one of the following of the target LP-WUS resource or the target LP-SS in the LP-WUS configuration: an identifier, time-frequency domain resource information, and a frequency; or
   a target rule, wherein the target rule is related to an identifier of the terminal.

7. The method according to claim 6, wherein the identifier of the terminal comprises at least one of the following:

an international mobile equipment identity IMEI, an international mobile subscriber identity IMSI, a 5G-SAE-temporary mobile subscriber identity 5G-S-TMSI, and a low-power wake-up signal identifier LP-WUS ID.

8. The method according to any one of claims 1 to 7, wherein

the LP-WUS configuration is transmitted by using a system message; or
the LP-WUS configuration is transmitted by using a radio resource control RRC release message.

9. The method according to any one of claims 1 to 8, wherein the method further comprises at least one of the following:

performing, by the terminal, serving cell measurement or radio resource management RRM measurement by using a low-power communication module;
performing, by the terminal, LP-WUS or LP-SS-based serving cell measurement; and
performing, by the terminal, LP-WUS or LP-SS-based RRM measurement, wherein the RRM measurement comprises serving cell RRM measurement or neighboring cell RRM measurement.

10. The method according to claim 9, wherein the method further comprises:

considering a low-power low-mobility relaxed measurement criterion to be satisfied if a difference between a first serving cell receiving strength and a low-power reference serving cell receiving strength is less than or equal to a first threshold, wherein
the first serving cell receiving strength is a serving cell receiving strength measured by using the low-power communication module.

11. The method according to claim 10, wherein the method further comprises:
setting, by the terminal, the low-power reference serving cell receiving strength to a current first serving cell receiving strength in a case that one of the following conditions is satisfied:

after a new cell or area is selected or reselected;
the first serving cell receiving strength is greater than the low-power reference serving cell receiving strength;
duration for which the low-power low-mobility relaxed measurement criterion is not satisfied reaches duration of a fluctuation monitoring window of low-power measurement;
after a main communication module-based relaxed measurement criterion is satisfied; or
after performing of relaxed measurement is started, wherein
the first serving cell receiving strength is the serving cell receiving strength measured by using the low-power communication module.

12. The method according to claim 9, wherein the method further comprises:

considering a relaxed measurement criterion of a low-power not-at-cell-edge terminal to be satisfied if a first serving cell receiving strength is greater than a low-power serving cell receiving strength threshold, wherein
the first serving cell receiving strength is a serving cell receiving strength measured by using the low-power communication module.

13. The method according to any one of claims 9 to 12, wherein the method further comprises: selecting, by the terminal, to perform a target relaxed measurement operation in a case that at least one of the following conditions is satisfied:

an indication instructing to relax, based on measurement of the low-power communication module, measurement of the main communication module is configured;
information instructing the terminal to perform low-mobility relaxed measurement evaluation based on measurement of the low-power communication module is configured;
the low-power low-mobility relaxed measurement criterion is satisfied;
information instructing the terminal to perform not-at-cell-edge relaxed measurement evaluation based on measurement of the low-power communication module is configured;
a low-power not-at-cell-edge relaxed measurement criterion is satisfied; and
duration for which the terminal already performs LP-WUS or LP-SS-based serving cell measurement or neighboring cell measurement reaches at least the duration of the fluctuation monitoring window of the low-power measurement.

**14.** The method according to claim 13, wherein the target relaxed measurement operation comprises at least one of the following:

relaxing serving cell measurement performed by using the main communication module;
relaxing RRM measurement performed by using the main communication module;
relaxing serving cell measurement performed by using the low-power communication module;
relaxing RRM measurement performed by using the low-power communication module;
performing RRM measurement by using the low-power communication module; and
during measurement evaluation performed by the low-power communication module, the main communication module being in a sleep or closed state.

**15.** The method according to any one of claims 9 to 14, wherein the method further comprises: receiving, by the terminal, a relaxed measurement configuration, wherein the relaxed measurement configuration comprises at least one of the following:

information instructing to relax, based on measurement of the low-power communication module, measurement of the main communication module;
information instructing the terminal to perform low-mobility relaxed measurement evaluation based on measurement of the low-power communication module;
information instructing the terminal to perform not-at-cell-edge relaxed measurement evaluation based on measurement of the low-power communication module;
a first threshold, wherein the first threshold is used for representing a threshold of a change of a received signal strength of a serving cell measured by the low-power communication module defined for relaxed measurement;
a low-power serving cell receiving strength threshold, wherein the low-power serving cell receiving strength threshold is used for representing a threshold of the received signal strength of the serving cell measured by the low-power communication module defined for relaxed measurement; and
the duration of the fluctuation monitoring window of the low-power measurement, wherein the duration of the fluctuation monitoring window of the low-power measurement is used for representing relaxed measurement evaluation duration of fluctuation of the received signal strength of the serving cell measured by the low-power communication module.

**16.** The method according to any one of claims 1 to 8, wherein the method further comprises:
performing, by the terminal, cell selection or reselection based on measurement of the low-power communication module.

**17.** The method according to claim 16, wherein the method further comprises: camping, by the terminal, on a current cell or area in a case that at least one of the following conditions is satisfied:

a first serving cell receiving strength is greater than a second threshold; and
cell selection based on measurement of the low-power communication module is configured, wherein
the first serving cell receiving strength is a serving cell receiving strength measured by using the low-power communication module.

**18.** The method according to claim 16, wherein the method further comprises: performing, by the terminal, a target operation in a case that at least one of the following conditions is satisfied:

a first serving cell receiving strength is less than a third threshold; and
an indication of cell-reselection evaluation based on measurement of the low-power communication module is configured, wherein
the first serving cell receiving strength is a serving cell receiving strength measured by using the low-power communication module.

**19.** The method according to claim 18, wherein the target operation comprises at least one of the following:

starting RRM measurement based on the low-power communication module;
serving cell measurement or RRM measurement based on a main communication module;
and
an evaluation process of cell reselection.

20. The method according to claim 16, wherein the performing, by the terminal, cell selection or reselection based on measurement of the low-power communication module comprises: calculating, by the terminal, an S value based on measurement of the low-power communication module; and

the method further comprises: receiving, by the terminal, a target configuration, wherein the target configuration comprises a low-power offset, and the low-power offset value is used for calculating the S value.

21. The method according to any one of claims 16 to 20, wherein the method further comprises: receiving, by the terminal, the target configuration, wherein the target configuration comprises at least one of the following:

a second threshold, wherein the second threshold is used for evaluating whether a current cell or area is capable of being camped on;

a third threshold, wherein the third threshold is used for evaluating whether to start to use the low-power communication module or the main communication module to perform RRM measurement;

information instructing to perform cell selection based on measurement of the low-power communication module;

information instructing to perform cell-reselection evaluation based on measurement of the low-power communication module or LP-SS-based measurement; and

the low-power offset, wherein the low-power offset is used for calculating the S value.

22. An LP-WUS monitoring method, comprising:

sending, by a network side device, an LP-WUS configuration, wherein the LP-WUS configuration comprises at least one LP-WUS resource, the LP-WUS configuration is used by a terminal to monitor an LP-WUS on a target LP-WUS resource, and the target LP-WUS resource belongs to the at least one LP-WUS resource.

23. The method according to claim 22, wherein the LP-WUS configuration further comprises at least one LP-SS, the LP-WUS configuration is further used by the terminal to monitor a target LP-SS, and the target LP-SS belongs to the at least one LP-SS.

24. The method according to claim 23, wherein the LP-SS comprises a first LP-SS and a second LP-SS, wherein

the first LP-SS comprises at least one of the following: a cell identifier, a system message indication, time information, and synchronization information, and the first LP-SS supports a measurement function; and

the second LP-SS supports a measurement function.

25. The method according to claim 23, wherein the method satisfies at least one of the following:

the target LP-WUS resource and the target LP-SS occupy a same frequency domain position;

the network-side device sends the LP-WUS and the target LP-SS in time division; and

the target LP-SS is subjected to inter-carrier frequency hopping transmission in the target LP-WUS resource.

26. The method according to any one of claims 22 to 25, wherein

the LP-WUS configuration comprises a plurality of LP-WUS resources and one LP-SS, the terminal is configured to monitor the LP-WUS on the target LP-WUS resource and monitor the target LP-SS based on the LP-WUS configuration, and the target LP-SS is the one LP-SS; or

the LP-WUS configuration comprises a plurality of LP-WUS resources and a plurality of LP-SSs, one LP-SS is in a same time domain range as at least one LP-WUS resource corresponding to the LP-SS, and the terminal is configured to monitor the LP-WUS on the target LP-WUS resource based on the LP-WUS configuration, and monitor a target LP-SS in a same time domain range as the target LP-WUS resource; or

the LP-WUS configuration comprises a plurality of LP-WUS resources and a plurality of LP-SSs, one LP-SS is in a same frequency domain range as at least one LP-WUS resource corresponding to the LP-SS, and the terminal is configured to monitor the LP-WUS on the target LP-WUS resource based on the LP-WUS configuration, and monitor a target LP-SS in a same frequency domain range as the target LP-WUS resource.

27. The method according to claim 26, wherein the method further comprises: determining the target LP-WUS resource or the target LP-SS corresponding to the terminal based on at least one of the following:

at least one of the following of the target LP-WUS resource or the target LP-SS in the LP-WUS configuration: an identifier, time-frequency domain resource information, and a frequency; or

a target rule, wherein the target rule is related to an identifier of the terminal.

28. The method according to any one of claims 22 to 27, wherein

the LP-WUS configuration is transmitted by using a system message; or
the LP-WUS configuration is transmitted by using an RRC release message.

29. The method according to any one of claims 22 to 28, wherein the method further comprises: sending, by the network side device, a relaxed measurement configuration, wherein the relaxed measurement configuration comprises at least one of the following:

information instructing to relax, based on measurement of the low-power communication module, measurement of the main communication module;
information instructing the terminal to perform low-mobility relaxed measurement evaluation based on measurement of the low-power communication module;
information instructing the terminal to perform not-at-cell-edge relaxed measurement evaluation based on measurement of the low-power communication module;
a first threshold, wherein the first threshold is used for representing a threshold of a received signal strength of a serving cell measured by the low-power communication module defined for relaxed measurement;
a low-power serving cell receiving strength threshold, wherein the low-power serving cell receiving strength threshold is used for representing a threshold of the received signal strength of the serving cell measured by the low-power communication module defined for relaxed measurement; and
duration of a fluctuation monitoring window of low-power measurement, wherein the duration of the fluctuation monitoring window of the low-power measurement is used for representing relaxed measurement evaluation duration of fluctuation of the received signal strength of the serving cell measured by the low-power communication module.

30. The method according to any one of claims 22 to 28, wherein the method further comprises: sending, by the network side device, a target configuration, wherein the target configuration comprises at least one of the following:

a second threshold, wherein the second threshold is used for evaluating whether a current cell or area is capable of being camped on;
a third threshold, wherein the third threshold is used for evaluating whether to start to use the low-power communication module or the main communication module to perform RRM measurement;
information instructing to perform cell selection based on measurement of the low-power communication module;
information instructing to perform cell-reselection evaluation based on measurement of the low-power communication module or LP-SS-based measurement; and
the low-power offset, wherein the low-power offset is used for calculating the S value.

31. An LP-WUS monitoring apparatus, comprising:

a receiving module, configured to receive an LP-WUS configuration, wherein the LP-WUS configuration comprises at least one LP-WUS resource; and
the receiving module is further configured to monitor an LP-WUS on a target LP-WUS resource based on the LP-WUS configuration, wherein the target LP-WUS resource belongs to the at least one LP-WUS resource.

32. The apparatus according to claim 31, wherein the LP-WUS configuration further comprises at least one LP-SS, and the receiving module is further configured to monitor a target LP-SS based on the LP-WUS configuration, and the target LP-SS belongs to the at least one LP-SS.

33. The apparatus according to claim 31 or 32, wherein

the LP-WUS configuration comprises a plurality of LP-WUS resources and one LP-SS, the apparatus monitors the LP-WUS on the target LP-WUS resource and monitors the target LP-SS based on the LP-WUS configuration, and the target LP-SS is the one LP-SS; or
the LP-WUS configuration comprises a plurality of LP-WUS resources and a plurality of LP-SSs, one LP-SS is in a same time domain range as at least one LP-WUS resource corresponding to the LP-SS, and the apparatus monitors the LP-WUS on the target LP-WUS resource based on the LP-WUS configuration, and monitors a target LP-SS in a same time domain range as the target LP-WUS resource; or

the LP-WUS configuration comprises a plurality of LP-WUS resources and a plurality of LP-SSs, one LP-SS is in a same frequency domain range as at least one LP-WUS resource corresponding to the LP-SS, and the apparatus monitors the LP-WUS on the target LP-WUS resource based on the LP-WUS configuration, and monitors a target LP-SS in a same frequency domain range as the target LP-WUS resource.

34. The apparatus according to any one of claims 31 to 33, wherein the receiving module is further configured to perform at least one of the following:

serving cell measurement or RRM measurement by using a low-power communication module;

LP-WUS or LP-SS-based serving cell measurement; and

LP-WUS or LP-SS-based RRM measurement, wherein the RRM measurement comprises serving cell RRM measurement or neighboring cell RRM measurement.

35. The apparatus according to any one of claims 31 to 33, wherein the receiving module is further configured to perform cell selection or reselection based on measurement of the low-power communication module.

36. An LP-WUS monitoring apparatus, comprising:

a sending module, configured to send an LP-WUS configuration, wherein the LP-WUS configuration comprises at least one LP-WUS resource, the LP-WUS configuration is used by a terminal to monitor an LP-WUS on a target LP-WUS resource, and the target LP-WUS resource belongs to the at least one LP-WUS resource.

37. The apparatus according to claim 36, wherein the LP-WUS configuration further comprises at least one LP-SS, the LP-WUS configuration is further used by the terminal to monitor a target LP-SS, and the target LP-SS belongs to the at least one LP-SS.

38. A terminal, comprising a processor and a memory, wherein the memory stores a program or instructions runnable on the processor, and the program or the instructions, when executed by the processor, implement the steps of the method according to any one of claims 1 to 21.

39. A network side device, comprising a processor and a memory, wherein the memory stores a program or instructions runnable on the processor, and the program or the instructions, when executed by the processor, implement the steps of the method according to any one of claims 22 to 30.

40. A readable storage medium, wherein the readable storage medium stores a program or instructions, and the program or the instructions, when executed by a processor, implement the steps of the method according to any one of claims 1 to 30.

41. A chip, wherein the chip comprises a processor and a communication interface, the communication interface is coupled to the processor, and the processor is configured to execute a program or instructions, to implement the method according to any one of claims 1 to 30.

42. A computer program product, wherein the program product is executed by at least one processor to implement the method according to any one of claims 1 to 30.

12

Network side device

11

11

Terminal

Terminal

FIG. 1

200

A terminal receives an LP-WUS configuration, where the LP-WUS configuration includes at least one LP-WUS resource ~ S202

The terminal monitors an LP-WUS on a target LP-WUS resource based on the LP-WUS configuration, where the target LP-WUS resource belongs to the at least one LP-WUS resource ~ S204

FIG. 2

Frequency

| LP-WUS Resource 1 | | LP-WUS Resource 3 |

| LP-WUS Resource 2 | | LP-WUS Resource 4 |

Time

FIG. 3

FIG. 4

FIG. 5

FIG. 6

700

A network side device sends an LP-WUS configuration, where the LP-WUS configuration includes at least one LP-WUS resource, the LP-WUS configuration is used by a terminal to monitor an LP-WUS on a target LP-WUS resource, and the target LP-WUS resource belongs to the at least one LP-WUS resource ~ S702

FIG. 7

Apparatus 800

Receiving module ~ 802

FIG. 8

Apparatus 900

Sending module ~ 902

FIG. 9

1000

Communication device

1001 ~ Processor ⟷ Memory ~ 1002

FIG. 10

1100

| | | |
|---|---|---|
| 1101 — Radio frequency unit | | Network module — 1102 |

1110 —

Memory

1109 — Application program

Operating system

Processor

Audio output unit — 1103

1104

Input unit

Graphics processing unit — 11041

Microphone — 11042

1108 — Interface unit

1107 —

User input unit

11071 — Touch panel

11072 — Another input device

1106

Display unit — 11061

Display panel

Sensor — 1105

## FIG. 11

1200   121

Network side device

124 — Processor

Radio frequency apparatus — 122

Bus interface

Baseband apparatus — 123

125 — Memory

Network interface

126

## FIG. 12

## INTERNATIONAL SEARCH REPORT

| | International application No. |
|---|---|
| | **PCT/CN2024/103415** |

| **A.** | **CLASSIFICATION OF SUBJECT MATTER** |
|---|---|

H04W 52/02(2009.01)i; H04W72/1273(2023.01)i

According to International Patent Classification (IPC) or to both national classification and IPC

| **B.** | **FIELDS SEARCHED** |
|---|---|

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; IEEE; 3GPP: 低功耗, 低功率, 唤醒信号, 监听, 监测, 检测, 同步, low power, wake up, signal+, detect+, monitor+, resource, config+, SS, synchronization signal

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 115767743 A (VIVO COMMUNICATION TECHNOLOGY CO., LTD.) 07 March 2023 (2023-03-07) <br> claims 1-40, description, paragraphs [0004]-[0032] and [0101]-[0126], and figures 1-11 | 1-42 |
| X | CN 113727421 A (BEIJING XIAOMI MOBILE SOFTWARE CO., LTD.) 30 November 2021 (2021-11-30) <br> description, paragraphs [0005]-[0138], and [0175]-[0176] | 1-42 |
| X | CN 113905429 A (GUANGDONG OPPO MOBILE COMMUNICATIONS CO., LTD.) 07 January 2022 (2022-01-07) <br> description, paragraphs [0004]-[0021] | 1-42 |
| A | US 2021258878 A1 (EVERACTIVE INC.) 19 August 2021 (2021-08-19) <br> entire document | 1-42 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 October 2024** | **11 October 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH RE~~PORT~~**
**Information on patent family me~~mbers~~**

| International application No. |
|---|
| **PCT/CN2024/103415** |

| Patent document cited in search report | | | Publication date (day/month/year) | Patent family member(s) | | | Publication date (day/month/year) |
|---|---|---|---|---|---|---|---|
| CN | 115767743 | A | 07 March 2023 | WO | 2023030189 | A1 | 09 March 2023 |
| | | | | US | 2024196327 | A1 | 13 June 2024 |
| | | | | EP | 4398663 | A1 | 10 July 2024 |
| CN | 113727421 | A | 30 November 2021 | None | | | |
| CN | 113905429 | A | 07 January 2022 | WO | 2021056546 | A1 | 01 April 2021 |
| | | | | EP | 3937441 | A1 | 12 January 2022 |
| | | | | CN | 113508566 | A | 15 October 2021 |
| | | | | US | 2022039014 | A1 | 03 February 2022 |
| | | | | KR | 20220074823 | A | 03 June 2022 |
| | | | | JP | 2022552582 | A | 19 December 2022 |
| US | 2021258878 | A1 | 19 August 2021 | US | 2023354196 | A1 | 02 November 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310818401